(19) Europäisches Patentamt
European Patent Office
Office européen des brevets

(11) EP 1 728 815 B1

(12) **EUROPÄISCHE PATENTSCHRIFT**

(45) Veröffentlichungstag und Bekanntmachung des Hinweises auf die Patenterteilung:
**23.07.2008 Patentblatt 2008/30**

(51) Int Cl.:
***C08J 5/18*** *(2006.01)*

(21) Anmeldenummer: **06010655.6**

(22) Anmeldetag: **24.05.2006**

(54) **Weiss-opake Folie mit niedriger Transparenz und verbesserter Durchschlagsfestigkeit**

White opaque film with low transparency with high dielectric strength

Feuille blanche opaque qui présente une faible transparence à haute rigidité diélectrique

(84) Benannte Vertragsstaaten:
**CH DE FR GB IT LI LU TR**

(30) Priorität: **01.06.2005 DE 102005025233**
**01.06.2005 DE 102005025231**

(43) Veröffentlichungstag der Anmeldung:
**06.12.2006 Patentblatt 2006/49**

(73) Patentinhaber: **Mitsubishi Polyester Film GmbH**
**65203 Wiesbaden (DE)**

(72) Erfinder:
- **Kern, Ulrich, Dr.**
**55218 Ingelheim (DE)**
- **Murschall, Ursula, Dr.**
**55283 Nierstein (DE)**
- **Kuhmann, Bodo**
**65594 Runkel (DE)**
- **Jesberger, Martin, Dr.**
**55122 Mainz (DE)**

(74) Vertreter: **Schweitzer, Klaus et al**
**Zounek Plate Schweitzer**
**Patentanwaltskanzlei**
**Rheingaustrasse 196**
**65203 Wiesbaden (DE)**

(56) Entgegenhaltungen:
**EP-A- 1 125 967**

- **PATENT ABSTRACTS OF JAPAN Bd. 012, Nr. 114 (P-688), 12. April 1988 (1988-04-12) & JP 62 243120 A (TEIJIN LTD), 23. Oktober 1987 (1987-10-23)**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

EP 1 728 815 B1

Printed by Jouve, 75001 PARIS (FR)

## Beschreibung

Die Erfindung betrifft eine weiß-opake Folie mit niedriger Transparenz und verbesserter Durchschlagsfestigkeit aus einem kristallisierbaren Thermoplast, welche gegebenenfalls eine zusätzliche Funktionalität aufweist. Die Folie enthält mindestens Bariumsulfat und Titandioxid als Pigmente sowie mindestens einen optischen Aufheller und gegebenenfalls einen oder mehrere im Thermoplasten lösliche Farbstoffe und weist gegebenenfalls mindestens eine zusätzliche Funktionalität auf. Die Folie zeichnet sich durch eine gute Verstreckbarkeit, durch eine niedrige Transparenz, eine verbesserte Durchschlagsfestigkeit sowie sehr gute optische Eigenschaften aus. Die Erfindung betrifft ferner ein Verfahren zur Herstellung dieser Folie und ihre Verwendung.

Opake Folien mit einer Dicke zwischen 10 und 500 μm sind bekannt.

In der EP-A-1 125 967 sind ebenfalls weiß-opake Folien aus kristallisierbaren Thermoplasten beschrieben. In dieser Schrift wird jedoch keinerlei Aussage über die Durchschlagsfestigkeit oder die Dichte der hergestellten Folien gemacht. Darüber hinaus enthalten diese Folien lediglich Bariumsulfat und einen optischen Aufheller. Die Transparenz dieser Folien liegt in allen aufgeführten Beispielen bei >12 % und ist demnach nicht für die hier geforderten Anwendungsbereiche geeignet.

US 4,780,402 beschreibt weiße Folien mit Bariumsulfat, gegebenenfalls optischem Aufheller und gegebenenfalls unverträglichem Polymer zur Einstellung der Transparenz. Die Dichte bei all diesen Folien liegt im Bereich von 1,1 bis 1,33 $kg/dm^3$. Diese niedrige Dichte deutet auf eine sehr hohe Anzahl von Voids (Vakuolen) hin, was zu einer deutlich verschlechterten Durchschlagsfestigkeit führt. Darüber hinaus liegt die Gelbzahl dieser Folien im negativen Bereich, d. h. die Folie ist blaustichig.

Aufgabe der vorliegenden Erfindung war es, eine weiß-opake Folie mit einer Dicke von bevorzugt 10 bis 500 μm bereitzustellen, die neben einer guten Verstreckbarkeit, guten optischen Eigenschaften, einer niedrigen Gelbzahl vor allem einen hohen Weißgrad, eine zusätzliche Funktionalität sowie eine niedrige Transparenz und eine gute elektrische Durchschlagsfestigkeit aufweist.

Eine zusätzliche Funktionalität bedeutet, dass die erfindungsgemäße Folie flammhemmend und/oder mit zusätzlichen UV-Stabilisatoren ausgerüstet ist und/oder siegelfähig ist und/oder auf einer oder beiden Oberflächen beschichtet ist und/oder auf einer oder beiden Seiten coronabehandelt und/oder mit Hydrolysestabilisatoren ausgerüstet und/oder entschrumpft ist.

Zu den guten optischen Eigenschaften zählen beispielsweise eine homogene, streifenfreie Einfärbung, eine niedrige Lichttransmission/Transparenz (dickenabhängig, bei 50 μm-Folie: bevorzugt 1 bis 20 %, insbesondere 2 bis 17 %, besonders bevorzugt 3 bis 15 %; bei 200 μm-Folie: bevorzugt 0,5 bis 8 %, insbesondere 0,6 bis 7 %, besonders bevorzugt 0,7 bis 6 %), sowie eine niedrige Gelbzahl YID (dickenabhängig, bei 50 μm-Folie: bevorzugt 1 bis 15, insbesondere 2 bis 14, besonders bevorzugt 3 bis 13; bei 200 μm-Folie: bevorzugt 1 bis 50, insbesondere 2 bis 45, besonders bevorzugt 3 bis 40).

Ein hoher Weißgrad bedeutet, dass der Weißgrad der Folien nach Berger gemäß der Erfindung bevorzugt bei >85 %, vorzugsweise bei >87 %, insbesondere bei >90 % liegt.

Zu der guten Verstreckbarkeit zählt, dass sich die Folie bei ihrer Herstellung sowohl in Längs- als auch in Querrichtung gut und ohne Abrisse orientieren lässt.

Eine hohe elektrische Durchschlagsfestigkeit bedeutet, dass die Durchschlagsfestigkeit einer 50 μm dicken Folie gemessen nach DIN 53481 nach der Kugel/Platte-Methode bei Wechselspannung (AC) bevorzugt >150 kV/mm, vorzugsweise >160 kV/mm, besonders bevorzugt >170 kV/mm beträgt. Die Durchschlagsfestigkeit ist dickenabhängig. Je dicker die Folie, desto niedriger die Durchschlagsfestigkeit.

Die Dichte der erfindungsgemäßen Folie ist bevorzugt größer als 1,390 $kg/dm^3$, insbesondere größer als 1,392 $kg/dm^3$, besonders bevorzugt größer als 1,394 $kg/dm^3$.

Die Dichte der Folie wird maßgeblich von der Anzahl und der Größe der Vakuolen bestimmt. Je mehr Vakuolen und je größer die Vakuolen sind, desto niedriger ist die Dichte. Beispielsweise ist die berechnete Dichte einer Folie, die 18 Gew.-% Bariumsulfat oder Titandioxid enthält 1,60 $kg/dm^3$. Als Maß für die Ausbildung von Vakuolen (Voids) gilt der sogenannte Void-Index. Der Void-Index ist definiert als Quotient aus gemessener Dichte und berechneter Dichte.

Der Void-Index der erfindungsgemäßen Folien liegt bevorzugt bei >87 %, insbesondere bei >88 %, besonders bevorzugt bei >89 %. Liegt der Void-Index bei 100 %, so sind gemessene Dichte und berechnete Dichte gleich, d.h. es gibt eine Vakuolen.

Darüber hinaus sollte die erfindungsgemäße Folie rezyklierbar sein, insbesondere ohne Verschlechterung der Durchschlagsfestigkeit und Verlust der optischen und der mechanischen Eigenschaften, damit sie beispielsweise auch für Elektroisolieranwendungen, Innenanwendungen und im Messebau eingesetzt werden kann.

Gelöst wird diese Aufgabe durch eine weiß-opake Folie mit einer Dicke im Bereich von bevorzugt 10 bis 500 μm, die als Hauptbestandteil einen kristallisierbaren Thermoplasten enthält (Hauptbestandteil bedeutet >50 Gew.-% bezogen auf das Gesamtgewicht der Folie). Die Folie enthält ferner mindestens Bariumsulfat und Titandioxid als Pigmente, mindestens einen optischen Aufheller, gegebenenfalls mindestens einen im Thermoplasten löslichen Farbstoff

und weist mindestens eine zusätzliche Funktionalität auf. Das Bariumsulfat und/oder das Titandioxid und/oder der optische Aufheller und/oder die Farbstoffe können direkt beim Rohstoffhersteller eingearbeitet werden, oder sie können als Masterbatche bei der Folienherstellung direkt zudosiert werden. Dabei kann die gewünschte niedrige Transparenz zusätzlich über das Längsstreckverhältnis der Folie eingestellt werden.

Die Folie gemäß der Erfindung enthält als Hauptbestandteil einen kristallisierbaren thermoplastischen Polyester (kristallisierbaren Thermoplasten). Der erfindungsgemäße Polyester enthält bevorzugt Einheiten aus Ethylenglykol und Terephthalsäure und/oder Einheiten aus Isophthalsäure, Naphthalin-1,5-dicarbonsäure, Naphthalin-2,6-dicarbonsäure und/oder Biphenyldicarbonsäure (= Bibenzoesäure) und/oder Einheiten aus aliphatischen oder cycloaliphatischen Diolen mit 2 bis 8 Kohlenstoffatomen, insbesondere aus Propylenglykol, Methylpropylenglykol, Butylenglykol und/oder Cyclohexandimethanol. Es handelt sich demgemäß beim erfindungsgemäßen thermoplastischen Polyester bevorzugt um Polyethylenterephthalat, Polytrimethlyenterephthalat, Polybutylenterephthalat, Poly(1,4-cyclohexandimethylenterephthalat), Polyethylen-naphthalin-2,6-dicarboxylat, Polyethylen-naphthalin-1,5-dicarboxylat, Polytrimethlyennaphthalat, Polyethylennaphthalat/Bibenzoat oderweitere Kombinationen aus den genannten Monomeren sowie um Gemische dieser Polyester. Polyethylenterephthalat (PET) und Polyethylennaphthalat (PEN) sowie Gemische davon sind bevorzugt. In einer weiteren bevorzugten Ausführungsform enthält der Polyester zusätzlich mindestens 5 Gew.-% Isophthalsäure.

Für die Zwecke der Erfindung werden auch Gemische aus kristallisierbaren thermoplastischen Polyestern als (kristallisierbarer) Thermoplast oder Polyester bezeichnet.

Unter der Bezeichnung Polyethylenterephthalate oder Polyethylennaphthalate sollen dabei Homopolymere, Compounds, Copolymere, Recyclate und andere Variationen verstanden werden.

Die erfindungsgemäßen Polyester können z. B. aus Dimethylterephthalat nach bekannten Verfahren, z. B. nach dem Umesterungsverfahren (DMT-Verfahren), hergestellt werden, wobei sich als Umesterungskatalysatoren Zink-, Magnesium-, Calcium-, Mangan-, Lithium- oder Germaniumsalze eignen. Sie können auch durch Direkteresterung hergestellt werden (PTA-Verfahren). Weiterhin sind erfindungsgemäße Polyester als Handelsprodukte erhältlich.

Verwendete Polykondensationskatalysatoren im Sinne der Erfindung sind dabei Antimon- oder Titanverbindungen oder Gemische daraus in einer Konzentration im Polyester von 1 bis 350 ppm (bezogen auf das Metall), vorzugsweise 2 bis 250 ppm und besonders bevorzugt 5 bis 200 ppm.

Die Folie gemäß der Erfindung kann sowohl einschichtig als auch mehrschichtig sein.

Die Folie enthält mindestens Bariumsulfat und Titandioxid als Pigmente, wobei die Gesamtkonzentration der Pigmente vorzugsweise zwischen 0,1 und 40 Gew.-%, bezogen auf das Gewicht des kristallisierbaren Thermoplasten, liegt. Vorzugsweise werden Titandioxid und auch Bariumsulfat über die sogenannte Masterbatch-Technologie entweder getrennt voneinander oder auch gemeinsam direkt bei der Folienherstellung zudosiert.

Die Folie enthält mindestens einen optischen Aufheller, wobei der optische Aufheller bevorzugt in Mengen von 1 bis 25.000 ppm, insbesondere bevorzugt von 2 bis 15.000 ppm, besonders bevorzugt von 3 bis 10.000 ppm, bezogen auf das Gewicht des kristallisierbaren Thermoplasten, eingesetzt wird. Vorzugsweise wird auch der optische Aufheller über die sogenannte Masterbatch-Technologie direkt bei der Folienherstellung zudosiert.

Die erfindungsgemäßen optischen Aufheller sind in der Lage, UV-Strahlen im Bereich von 360 bis 380 nm zu absorbieren und als längerwelliges, sichtbares blauviolettes Licht wieder abzugeben.

Geeignete optische Aufheller sind beispielsweise Bis-benzoxazole, Coumarin-Derivate (Benzotriazol-Coumarin, Naphthotriazol-Coumarin) oder auch Bis-(styryl)biphenyle. Besonders bevorzugt sind ®Uvitex OB-One (Ciba Specialities, Basel, CH), ®Hostalux KS (Clariant, DE) sowie ®Eastobrite OB-1 (Eastman). Diese und weitere geeignete Systeme sind auch beschrieben in "Plastics Additives Handbook", 5. Ausgabe, Carl Hanser Verlag, Deutschland, 2001.

Sofern zweckmäßig können neben dem optischen Aufheller auch noch ein oder mehrere im erfindungsgemäßen Polyester lösliche Farbstoffe zugesetzt werden. Die Farbstoffe werden in Mengen von bevorzugt 1 bis 100 ppm, insbesondere bevorzugt 1 bis 30 ppm, besonders bevorzugt 1 bis 20 ppm, bezogen auf das Gewicht des kristallisierbaren Thermoplasten, eingesetzt.

Es war völlig überraschend, dass der Einsatz der oben genannten Kombination aus Bariumsulfat, Titandioxid, optischem Aufheller und gegebenenfalls zugesetzten Farbstoffen in den Folien bevorzugt in Verbindung mit einem erhöhten Längsstreckverhältnis bei der Folienherstellung zu dem gewünschten Ergebnis führte.

Des Weiteren ist sehr überraschend, dass auch das Regenerat wieder einsetzbar ist, ohne den Gelbwert und die Durchschlagsfestigkeit der Folie nennenswert negativ zu beeinflussen.

In einer bevorzugten Ausführungsform werden gefällte Bariumsulfat-Typen eingesetzt. Gefälltes Bariumsulfat erhält man aus Bariumsalzen und Sulfaten oder Schwefelsäure als feinteiliges farbloses Pulver, dessen Korngröße durch die Fällungsbedingungen zu steuern ist. Gefällte Bariumsulfate können nach den üblichen Verfahren, die in Kunststoff-Journal 8, Nr. 10, 30-36 und Nr. 11, 36-31 (1974) beschrieben sind, hergestellt werden.

Die Menge an Bariumsulfat beträgt bevorzugt 0,1 bis 40 Gew.-%, vorzugsweise 0,5 bis 25 Gew.-%, besonders bevorzugt 1 bis 20 Gew.-% bezogen auf das Gewicht des Thermoplasten.

Die mittlere Teilchengröße ist relativ klein und liegt im Bereich von bevorzugt 0,1 bis 5 $\mu$m, insbesondere im

Bereich von 0,2 bis 3 µm. Die Dichte des verwendeten Bariumsulfates liegt bevorzugt zwischen 4 und 5 g/cm³.

In einer besonders bevorzugten Ausführungsform enthält die erfindungsgemäße Folie als Hauptbestandteil ein kristallisierbares Polyethylenterephthalat sowie 0,1 bis 40 Gew.-% gefälltes Bariumsulfat, zweckmäßigerweise mit einem Teilchendurchmesser von 0,2 bis 1 µm, wobei ®Blanc fixe XR-HX oder ®Blanc fixe HXH von der Fa. Sachtleben Chemie besonders bevorzugt wird.

Die verwendeten Titandioxidteilchen bestehen entweder aus der Anatas- oder der Rutil-Modifikation oder Mischungen daraus, wobei Rutil bevorzugt wird. Rutil zeigt im Vergleich zu Anatas eine höhere Deckkraft. In einer bevorzugten Ausführungsform bestehen die Titandioxidteilchen zu mindestens 95 Gew.-% aus Rutil. Sie können nach einem üblichen Verfahren, z. B: nach dem Chlorid- oder dem Sulfat-Prozess, hergestellt werden. Ihre Menge beträgt bevorzugt 0,1 bis 40 Gew.-%, bezogen auf das Gewicht des Thermoplasten. Die mittlere Teilchengröße ist relativ klein und liegt vorzugsweise im Bereich von 0,1 bis 1,0 µm.

Durch Titandioxid der beschriebenen Art entstehen innerhalb der Polymermatrix kaum Vakuolen während der Folienherstellung.

Die Titandioxidteilchen können einen Überzug aus anorganischen Oxiden besitzen, wie er üblicherweise als Überzug für $TiO_2$-Weißpigment in Papieren oder Anstrichmitteln zur Verbesserung der Lichtechtheit eingesetzt wird.

$TiO_2$ist bekanntlich fotoaktiv. Bei Einwirkung von UV-Strahlen bilden sich freie Radikale auf der Oberfläche der Partikel. Diese freien Radikale können in die Polymermatrix wandern, was zu Abbaureaktionen und Vergilbung führt. Um dies zu vermeiden, können die $TiO_2$-Partikel oxydisch beschichtet werden. Zu den besonders geeigneten Oxiden für die Beschichtung gehören die Oxide von Aluminium, Silicium, Zink oder Magnesium oder Mischungen aus zwei oder mehreren dieser Verbindungen. $TiO_2$-Partikel mit einem Überzug aus mehreren dieser Verbindungen werden z. B. in der EP-A-0 044 515 und EP-A-0 078 633 beschrieben. Weiterhin kann der Überzug organische Verbindungen mit polaren und unpolaren Gruppen enthalten oder aus diesen bestehen.

Die organischen Verbindungen müssen bei der Herstellung der Folie durch Extrusion der Polymerschmelze ausreichend thermostabil sein. Polare Gruppen sind beispielsweise -OH; -OR; -COOX; (X = R, H oder Na, R = Alkyl mit 1 bis 34 C-Atomen). Bevorzugte organische Verbindungen sind Alkanole und Fettsäuren mit 8 bis 30 C-Atomen in der Alkylgruppe, insbesondere Fettsäuren und primäre n-Alkanole mit 12 bis 24 C-Atomen, sowie Polydiorganosiloxane und/oder Polyorganohydrogensiloxane wie z. B. Polydimethylsiloxan und Polymethylhydrogensiloxan.

Der Überzug für die Titandioxidteilchen besteht bevorzugt aus 1 bis 12 g, insbesondere 2 bis 6 g anorganischer Oxide und/oder 0,5 bis 3 g, insbesondere 0,7 bis 1,5 g organischer Verbindung, bezogen auf 100 g Titandioxidteilchen. Der Überzug wird üblicherweise auf die Teilchen in wässriger Suspension aufgebracht. Die anorganischen Oxide können aus wasserlöslichen Verbindungen, z. B. Alkali-, insbesondere Natriumnitrat, Natriumsilikat (Wasserglas) oder Kieselsäure in der wässrigen Suspension ausgefällt werden.

Unter anorganischen Oxiden wie $Al_2O_3$ oder $SiO_2$ sind auch die Hydroxide oder deren verschiedene Entwässerungsstufen wie z. B. Oxidhydrat zu verstehen, ohne dass man deren genaue Zusammensetzung und Struktur kennt. Auf das $TiO_2$-Pigment werden nach dem Glühen und Mahlen in wässriger Suspension die Oxidhydrate z. B. des Aluminiums und/oder Silizium gefällt, die Pigmente dann gewaschen und getrocknet. Diese Ausfällung kann somit direkt in einer Suspension geschehen, wie sie im Herstellungsprozess nach der Glühung und der sich anschließenden Nassmahlung anfällt. Die Ausfällung der Oxide und/oder Oxidhydrate der jeweiligen Metalle erfolgt aus den wasserlöslichen Metallsalzen im bekannten pH-Bereich, für das Aluminium wird beispielsweise Aluminiumsulfat in wässriger Lösung (pH kleiner 4) eingesetzt und durch Zugabe von wässriger Ammoniaklösung oder Natronlauge im pH-Bereich zwischen 5 und 9, vorzugsweise zwischen 7 und 8,5, das Oxidhydrat gefällt. Geht man von einer Wasserglas- oder Alkalialuminatlösung aus, sollte der pH-Wert der vorgelegten $TiO_2$-Suspension im stark alkalischen Bereich (pH größer 8) liegen. Die Ausfällung erfolgt dann durch Zugabe einer Mineralsäure wie beispielsweise Schwefelsäure im pH-Bereich 5 bis 8. Nach der Ausfällung der Metalloxide wird die Suspension noch ca. 15 min bis etwa 2 h gerührt, wobei die ausgefällten Schichten eine Alterung erfahren. Das beschichtete Produkt wird von der wässrigen Dispersion abgetrennt und nach dem Waschen bei erhöhter Temperatur, insbesondere bei 70 bis 100 °C, getrocknet.

In einer bevorzugten Ausführungsform enthält die Folie gemäß der Erfindung neben dem kristallisierbaren Thermoplasten, der vorzugsweise Polyethylenterephthalat ist, 0,1 bis 40 Gew.-% Titandioxid vom Rutil-Typ mit einem Teilchendurchmesser von 0,1 bis 0,5 µm, welches als Masterbatch bei der Folienherstellung zudosiert wird, wobei Titandioxid der Firma Kerr McGee (®Tronox RFK2) oder Sachtleben (®Hombitan der Klassen R oder RC) bevorzugt wird.

Des Weiteren enthält die erfindungsgemäße Folie vorzugsweise 1 bis 25.000 ppm eines optischen Aufhellers, der in dem kristallisierbaren Thermoplasten löslich ist, wobei ®Uvitex OB-One (Ciba Specialities, Basel, CH), ®Hostalux KS sowie ®Eastobrite OB-1 (Eastman) besonders bevorzugt sind. ppm bedeutet Gewichtsteile bezogen auf das Gewicht des kristallisierbaren Thermoplasten bzw. Polyesters. Es können auch Mischungen verschiedener Aufheller eingesetzt werden.

Die erfindungsgemäße Folie enthält gegebenenfalls einen oder mehrere im Polyester lösliche Farbstoffe. Der Anteil der Farbstoffe beträgt bevorzugt 1 bis 100 ppm, insbesondere 1 bis 30 ppm, besonders bevorzugt 1 bis 20 ppm. Unter ppm werden Gewichtsteile bezogen auf das Gewicht des die Farbstoffe enthaltenden Polyesters verstanden. Es

können auch Mischungen verschiedener Farbstoffe eingesetzt werden.

Vorteilhaft für die erfindungsgemäße Folie ist, dass der oder die Farbstoffe neben ihrer Löslichkeit in Polyester eine hohe thermische Stabilität aufweisen und nicht aus der Folie migrieren oder während des Herstellprozesses aus der Folie ausdampfen und somit zu unerwünschten Ablagerungen in den Produktionsanlagen führen. Des Weiteren sollten die für die erfindungsgemäßen Polyesterfolien verwendeten Farbstoffe für den Lebensmittelkontakt und für medizinische Anwendungen zugelassen sein bzw. zur Zulassung geeignet sein.

Unter löslichen Farbstoffen versteht man Substanzen, die im Polymeren molekular gelöst sind (DIN 55949, EN12887).

Die farbliche Veränderung der orientierten Folie beruht auf derwellenlängenabhängigen Absorption und/oder Streuung des Lichtes. Farbstoffe können Licht nur absorbieren, nicht streuen, da die physikalische Voraussetzung für Streuung eine bestimmte Teilchengröße ist.

Bei der Einfärbung mit Farbstoff handelt es sich um einen Lösungsprozess. Als Ergebnis dieses Lösungsprozesses ist der Farbstoff molekular beispielsweise in dem Polyester gelöst. Derartige Einfärbungen werden als transparent oder durchscheinend oder transluzent oder opal bezeichnet.

Von den verschiedenen Klassen der löslichen Farbstoffe werden besonders die fett-und aromatenlöslichen Farbstoffe bevorzugt. Dabei handelt es sich beispielsweise um Azo-, Phthalocyanin-, Isochinolin, Methin- und Anthrachinonfarbstoffe oder Perinone. Sie eignen sich insbesondere zur Einfärbung von PET, da aufgrund der hohen Glasübergangstemperaturen von PET die Migration des Farbstoffes eingeschränkt ist. (Literatur J. Koerner: Lösliche Farbstoffe in der Kunststoffindustrie in "VDI-Gesellschaft Kunststofftechnik:": Einfärben von Kunststoffen, VDI-Verlag, Düsseldorf 1975).

Geeignet sind auch Mischungen von zwei oder mehreren dieser löslichen Farbstoffe.

Besonders geeignet sind Farbstoffe, die ein hohes Molekulargewicht besitzen, dadiese Farbstoffe eine niedrigere Tendenz haben, aus der Polyestermatrix zu migrieren bzw. während des Herstellprozesses aus dem Polyester auszudampfen. Darüber hinaus sind solche Farbstoffe in der Regel thermisch stabiler und somit für die hohen Verarbeitungstemperaturen von Polyestern besser geeignet.

Geeignete lösliche Farbstoffe sind beispielsweise diejenigen, die von der Fa. Clariant unter dem Handelsnamen ®Polysynthren oder von der Fa. Lanxess unter dem Handelsnamen ®Macrolex angeboten werden. Auch die Farbstoffe von Ciba Specialities mit der Handelsbezeichnung ®Filester sind geeignet.

Als besonders geeignet haben sich Polysynthren Red FBL (Anthrachinon-Derivat, Fa. Clariant), Polysynthren Red GFP (Perinon, Fa. Clariant), Polysysthren Blue RBL und RLS (beides Anthrachinon-Derivate, Fa. Clariant), Macrolex Rot 5B Gran (Anthrachinon-Derivat, Fa. Lanxess), Macrolex Rot E2G Gran und EG Gran (Perinone, Fa. Lanxess), Macrolex Blue 3R Gran (Anthrachinon-Derivat, Fa. Lanxess), Macrolex Blue RR Gran (Anthrachinon-Derivat, Fa. Lanxess), Filester Red GA (Perinon, Fa. Ciba Specialities) und Filester Blue GN (Phthalocyanin, Fa. Ciba Specialities) erwiesen.

Durch die synergistische Wirkung der Additive Bariumsulfat, Titandioxid, optischer Aufheller und gegebenenfalls löslicher Farbstoff bevorzugt in Verbindung mit einem optimierten Längsstreckverhältnis ist die Folie weißer, d.h. weniger gelbstichig, und weniger lichtdurchlässig, d.h. sie hat eine niedrigere Transparenz als eine nur mit Bariumsulfat ausgerüstete Folie.

Im Vergleich zu einer nur mit Bariumsulfat ausgerüsteten Folie hat die erfindungsgemäße Folie bei vergleichbarem Gesamtpigmentgehalt eine deutlich geringere Anzahl von Vakuolen und somit eine höhere Dichte. Dadurch weist die Folie eine deutlich verbesserte Durchschlagsfestigkeit auf.

Die Standardviskosität SV (DCE) des als bevorzugter Hauptbestandteil für die Folie verwendeten Polyethylenterephthalats, gemessen in Dichloressigsäure nach DIN 53728, liegt bevorzugt zwischen 600 und 1100, insbesondere zwischen 700 und 1000.

Die intrinsische Viskosität IV (DCE) berechnet sich aus der Standardviskosität SV (DCE) wie folgt:

$$IV = \{\eta\} = 6{,}907 \cdot 10^{-4} \cdot SV\ DCE) + 0{,}063096\ \{dl/g\}$$

Eine erfindungsgemäße Folie kann sowohl einschichtig als auch mehrschichtig sein.

In der mehrschichtigen Ausführungsform ist die Folie aus mindestens einer Kernschicht (B) und mindestens einer Deckschicht (A oder C) aufgebaut, wobei insbesondere ein dreischichtiger A-B-A oder A-B-C Aufbau bevorzugt ist.

Für diese Ausführungsform ist es vorteilhaft, wenn der Polyester (bevorzugt PET) der Kernschicht eine ähnliche Standardviskosität besitzt wie der Polyester der Deckschichten, die an die Kernschicht angrenzen.

In einer besonderen Ausführungsform können die Deckschichten auch aus einem Polyethylennaphthalat-Homopolymeren oder aus einem Polyethylenterephthalat-Polyethylennaphthalat-Copolymeren oder einem Compound bestehen. Die Kernschicht besteht dann bevorzugt aus PET.

In dieser Ausführungsform haben die Thermoplaste der Deckschichten ebenfalls eine ähnliche Standardviskosität wie das Polyethylenterephthalat der Kernschicht.

In der mehrschichtigen Ausführungsform sind das Bariumsulfat, das Titandioxid sowie der optische Aufheller und gegebenenfalls der oder die Farbstoffe vorzugsweise in der Kernschicht enthalten. Bei Bedarf können auch die Deckschichten ausgerüstet sein.

Anders als in der einschichtigen Ausführungsform bezieht sich hier die Konzentration der Additive auf das Gewicht der Thermoplaste in der mit den Additiven ausgerüsteten Schicht oder den damit ausgerüsteten Schichten.

Des Weiteren ist die erfindungsgemäße Folie ohne Umweltbelastung und ohne Verlust der Durchschlagsfestigkeit problemlos rezyklierbar, wodurch sie sich beispielsweise für die Verwendung als Elektroisolierfolie, für kurzlebige Werbeschilder, Labels oder anderer Werbeartikel, für Lebensmittelverpackungen, als Folie für medizinische Anwendungen und vieles mehr eignet.

Die Herstellung der erfindungsgemäßen Folie kann beispielsweise nach einem Extrusionsverfahren in einer Extrusionsstraße erfolgen.

Erfindungsgemäß können das Bariumsulfat, das Titandioxid, der optische Aufheller und gegebenenfalls der oder die Farbstoffe bereits beim Thermoplast-Rohstoffhersteller zudosiert werden oder bei der Folienherstellung in den Extruder dosiert werden. Die Additive können auch über Extrusionsmasterbatche zudosiert werden. Bei der Herstellung solcher Extrusionsmasterbatche werden die Additive direkt dem Polyester zugegeben und gemeinsam compoundiert. Auch die Zudosierung von Farbstoffen ist über diese Variante möglich.

Besonders bevorzugt sind die Zugabe des Bariumsulfats, des Titandioxides, des optischen Aufhellers und gegebenenfalls des oder der Farbstoffe über die Masterbatch-technologie. Die Additive werden in einem festen Trägermaterial voll dispergiert. Als Trägermaterialien kommen der Thermoplast selbst, wie z. B. das Polyethylenterephthalat oder auch andere Polymere, die mit dem Thermoplasten ausreichend verträglich sind, in Frage.

Wichtig ist, dass die Korngröße und das Schüttgewicht des/der Masterbatches ähnlich der Korngröße und dem Schüttgewicht des Thermoplasten sind, so dass eine homogene Verteilung und damit eine homogener Weißgrad und somit eine homogene Opazität und Durchschlagsfestigkeit erreicht werden.

**Zusätzliche Funktionalität**

Beschichtung

Zur Verbesserung der Verbundhaftung kann die Polyesterfolie ein- oder beidseitig nach bekannten Verfahren mit einer üblichen funktionalen Beschichtung versehen werden. Zur Herstellung der Beschichtung lassen sich beispielsweise einsetzen: Acrylate gemäß WO 94/13476, Ethylenvinylalkohole, PVDC, Wasserglas ($Na_2SiO_4$), hydrophilische Polyesterwie 5-Natrium-sulfoisophthalsäurehaltige PET/IPA-Polyester (EP-A 144 878, US-A 4 252 885 oder EP-A 296 620), Vinylacetate (WO 94/13481), Polyvinylacetate, Polyurethane, Alkali- oder Erdalkalisalze von ($C_{10}$-$C_{18}$) Fettsäuren, Silane, Butadiencopolymere mitAcrylnitril oder Methylmethacrylat, Methacrylsäure, Acrylsäure oder deren Ester. Außerdem kann die Beschichtung übliche Additive (z.B. Antiblockmittel, pH-Stabilisatoren) in Anteilen von etwa 0,05 bis 5,0 Gew.-%, bevorzugt 0,1 bis 3,0 Gew.-%, jeweils bezogen auf das Gewicht der Beschichtungsflüssigkeit, enthalten.

Die genannten Stoffe oder Zusammensetzungen werden als verdünnte - vorzugsweise wässrige - Lösung, Emulsion oder Dispersion auf eine oder beide Folienoberflächen aufgetragen. Anschließend wird das Lösungsmittel verflüchtigt. Die Beschichtung wird bevorzugt in-line aufgebracht, d. h. während des Folienherstellprozesses, zweckmäßigerweise vor der Querstreckung. Besonders bevorzugt ist die Aufbringung nach dem "Reverse gravure-roll coating"-Verfahren, mit dem äußerst homogene Schichtdicken erhalten werden. Werden die In-line-Beschichtungen nach der Längsverstreckung aufgebracht, reicht gewöhnlich die Temperaturbehandlung vor der Querverstreckung aus, um das Lösungsmittel zu verflüchtigen und die Beschichtung zu trocknen. Die getrockneten Beschichtungen haben dann Schichtdicken von bevorzugt 5 bis 100 nm, besonders bevorzugt 20 bis 70 nm, insbesondere 30 bis 50 nm.

In einer besonderen Ausführungsform ist die Folie mit einem Aminosilan beschichtet, wie nachfolgend näher beschrieben wird.

In US-PS 4,663,228 ist die Verwendung von N-2-Aminoethyl-3-aminopropyltrimethoxysilan beschrieben, das unter dem Warenzeichen Z-6020 von den Firmen Dow Corning und Worlee vertrieben wird. Es beschreibt die Grundierung eines Ionomerharzes (Salz eines Ethylen-Methacrylsäure-Copolymers) auf Glas und Polycarbonatfolien.

In DE 689 26 896 T2 ist die Verwendung der Beschichtung an Polyesterfolien beschrieben. Dabei wird eine Polyesterfolie mit einem hydrolysierten aminofunktionellen Silan beschichtet. Die Beschichtung dient zur direkten Aufextrudierbarkeit von Folien ohne zusätzliche Koronabehandlung oder zusätzliche Grundierung, insbesondere auf Polyethylen-, Ethylen-Copolymer- und -Ionomer- oder anderen Polymerfolien.

Keine der Veröffentlichungen beschreibt die sehr gute Enzymhaftfestigkeit der Beschichtung, die überraschenderweise an einem biaxial orientierten Polyesterfilm mit der hydrolysierten aminofunktionellen Silanbeschichtung festgestellt wurde.

Die als Beschichtung für die Zwecke der vorliegenden Erfindung geeigneten aminofunktionellen Silane werden im unhydrolysierten Zustand durch die allgemeine Formel

$$(R^1)_x Si(R^2)_y (R^3)_z$$

dargestellt, wobei $R^1$ eine funktionelle Gruppe mit mindestens einer primären Aminogruppe wie z.B. Ethylamin bedeutet, $R^2$ eine hydrolysierbare Gruppe, wie z. B. eine niedere Alkoxygruppe, eine Acetogruppe oder ein Halogenid, und $R^3$ eine unreaktive, nicht hydrolysierbare Gruppe, wie z. B. eine niedere Alkylgruppe oder eine Phenylgruppe, bedeutet; Wobei (x) größer oder gleich 1; (y) größer oder gleich 1; (z) größer oder gleich null und x+y+z=4 ist. Unter niederer Alkoxy- bzw. Alkylgruppe werden bevorzugt Kettenlängen von $C_1$ bis $C_8$ verstanden.

Im Allgemeinen wird das Aminosilan in Wasser hydrolysiert, und es wird nach herkömmlichen Verfahren, wie z. B. durch Sprüh- oder Walzenbeschichtung, auf eine oder mehrere Seiten der orientierten Polyesterfolie aufgebracht. Nach dem Trocknen der Aminosilanbeschichtung kann man auf die Polyesterfolie leicht ein oder mehrere Polymere aufextrudieren bzw. diese als Polyesterfolie mit einer funktionellen Beschichtung mit sehr guter Enzymhaftfestigkeit verwenden.

Silane sind nach Hydrolyse in Wasser löslich oder dispergierbar, darunter sind aminofunktionelle Silane besonders gut in Wasser löslich. Hydrolysierte Aminosilane zeichnen sich auf Polyesterfolien als sehr gute Haftvermittler zur Aufextrusion von Polymeren aus, ohne dass dabei eine Koronabehandlung oder weitere Beschichtung erforderlich ist. In der vorliegenden Erfindung wurde überraschenderweise festgestellt, dass die Enzyme sehr gut an der Oberfläche einer so beschichteten Folie anhaften.

Die in Form einer wässrigen Lösung und/oder Dispersion vorliegende erfindungsgemäße Beschichtung aus hydrolysiertem Aminosilan kann In-line während einer von drei Stufen der Folienherstellung aufgetragen werden, und zwar in der Stufe vor dem ersten Strecken, wie es beispielsweise in der GB-PS1,411,564 beschrieben ist, oder nach der Streckstufe im Anschluss an das biaxiale Strecken, jedoch vor dem Aufwickeln der Folie. In der Regel reicht die der Folie während des Streckens oder den abschließenden Konditionierstufen zugeführte Wärme zur Vertreibung von Wasser und anderen flüchtigen Bestandteilen und zur Trocknung der Beschichtung aus. Würde die Beschichtung erst im Anschluss an derartige Heizschritte aufgebracht, wäre ein separater Trocknungsschritt erforderlich. Bevorzugt bringt man die Beschichtung nach dem uniaxialen Strecken der Folie, das heißt nach dem Strecken der Folie in einer Richtung, auf. Bevorzugt erfolgt die Streckung zunächst in Längsrichtung bevor die Beschichtung aufgetragen wird. Die Beschichtung kann dabei beispielsweise durch Walzenbeschichtung, Sprühbeschichtung, Schlitzgießerauftrag oder Tauchbeschichtung erfolgen. Bevorzugt wird hierbei die Beschichtung mit Gravurwalzen. Vor dem Beschichten unterzieht man eventuell die uniaxial gestreckte Folie einer Koronabehandlung in einer Koronaentladevorrichtung. Durch die Koronabehandlung wird die Hydrophobizität der Oberfläche verringert, so dass die wässrige Beschichtung die Oberfläche besser benetzten kann, wodurch sich die Haftung der Beschichtung an der Oberfläche verbessert.

Das hydrolysierte Aminosilan wird als wässrige Lösung mit einer Konzentration von bevorzugt 0,2 bis 6 Gew.-% an hydrolysiertem Aminosilan auf die Folie aufgebracht. Danach gibt man zur Erleichterung der Hydrolyse ca. 0,2 Gew.-% einer schwachen Säure, wie z. B. Essigsäure, Phosphorsäure oder dergleichen, zu. Die bevorzugte Konzentration ist so bemessen, dass sich ein Schichtgewicht der trockenen Beschichtung von bevorzugt 0,5 mg/$m^2$ ergibt. Wird die Beschichtung off-line, d. h. in einem separaten Beschichtungsvorgang nach Fertigstellung der Folie, aufgebracht, kann das Schichtgewicht aber auch wesentlich höher sein, wobei mit Trockengewichten von 50 mg/$m^2$ oder mehr gute Ergebnisse erzielt wurden. Die Beschichtung kann ein-oder beidseitig auf die Folie aufgebracht werden; jedoch ist es auch möglich, eine Seite mit der beschriebenen Beschichtung und die andere Seite mit einer anderen Beschichtung zu versehen.

Die Beschichtungszusammensetzung kann zusätzlich noch weitere Bestandteile enthalten, sofern diese die haftvermittelnde Wirkung des hydrolysierten Aminosilans nicht beeinträchtigen. Dazu gehören z.B. geringe Mengen an kolloidalem Siliciumdioxid, Farbstoffen, den pH-Wert regulierenden Mitteln, Netzmitteln und dergleichen. Die Beschichtung liegt auf der Folienoberfläche als kontinuierliche Schicht vor, wobei unter diesem Begriff auch Beschichtungen mit Inselstruktur oder voneinander getrennten Schichtbereichen fallen.

Die Produktionsrückstände der beschichteten Polyesterfolien können regeneriert werden. Das Regenerat kann erneut aufgeschmolzen und zur Herstellung von orientierter Folie erneut extrudiert werden.

In einer anderen besonderen Ausführungsform ist die erfindungsgemäßefolie silikonbeschichtet. Silikonisierte Polymerfolien sind bekannt und im Handel erhältlich. Die Silikonbeschichtung findet Verwendung als "release"-Schicht für Etiketten oder findet beispielsweise für dekorative Laminate Verwendung. Die Silikon-Beschichtung der silikonisierten Folie erlaubt das Anhaften auf der kleberbeschichten Seite der Etiketten und die silikonisierte Folie kann einfach vom Endnutzer entfernt werden. Silikonisierte Folie kann auch als Beschichtung von Behältern, die für den Lebensmittelkontakt bestimmt sind, verwendet werden. In Pizzaverpackungen findet beispielsweise die silikonisierte Folie ihre Anwendung. Die Folie kann durch die "release"-Schicht sehr leicht von dem geschmolzenen Käse auf der Pizza abgezogen werden. Die Pizza kann dadurch einfacher serviert werden, ohne dass es zu Verklebungen des geschmolzenen Käses

mit der Verpackung kommt.

Eine Reihe von "Release"-Beschichtungen auf der Basis von Silikon sind bereits bekannt und wurden beschrieben. Diese Silikonbeschichtungen beinhalten Formulierungen mit Quervernetzern, Stoffe, die mit UV-Licht und Hitze aushärten, lösungsmittelfreie und -haltige Systeme und Kombinationen, wie beispielsweise lösungsmittelfreie Systeme, die im UV-Licht aushärten.

In US 5,350,601 wird eine Primer-Beschichtung beschrieben, die einen Glycidoxysilan und einen Copolyester enthält. Diese Primer-Beschichtung, die unter der Silikonschicht aufgetragen ist, verbessert die Anhaftung und Unversehrtheit der Silikonschicht, die nachträglich aufgetragen wird.

In US 5,350,601 wird eine Primer-Beschichtung beschrieben, die auf beiden Seiten der Folie aufgetragen wird und eine Silikon-Beschichtung, die auf beiden Seiten anschließend aufgetragen wird. US 5,350,601 beschreibt nicht die Primer-Beschichtung nur von einer Seite der Folie, während die andere Seite unbeschichtet oder mit einer anderen Beschichtung versehen ist.

EP-A 1,013,703 beschreibt eine Polyesterfolie, die auf der einen Seite eine Silikon-Beschichtung und auf der anderen Seite eine Gleitschicht enthält oder auf der anderen Seite unbeschichtet ist.

Die im Handel erhältliche Hostaphan ®3SAC Folie ist mit einer fertigen Primerbeschichtung für die nachträgliche Silikonisierung auf beiden Seiten ausgestattet. Die Primerbeschichtung beinhaltet einen Isophthalsäure/Natriumsalz der 5-Sulphonisophthalsäure / Malonsäure / Ethylenglykolcopolyester, ein Glycidoxypropyltrimethoxysilan, ein kolloidales Siliciumdioxid und Natriumlaurylsulfat. Bevorzugt wird das Glycidoxypropyltrimethylsilan der Fa. Dow Corning (Z-6040) und das kolloidale Siliciumdioxid ®Nalco 1060. Eine erfindungsgemäß verwendete nachträgliche Beschichtung für die Silikonisierung ist im Handel, z.B. von Wacker Silicones Company, General Electric Silicones und Dow Corning erhältlich. Ein Beispiel für eine Silicon-beschichtete Polyesterfolie bildet das Hostaphan ®2SLK.

In einer weiteren besonderen Ausführungsform kann die Folie auf beiden Seiten mit der gleichen Beschichtung oder aber auch mit unterschiedlichen Beschichtungen versehen sein.

Die Polyesterfolie kann auch gegebenenfalls mit $SiO_x$, Aluminium oder $Al_2O_x$ beschichtet sein. Die Dicke dieser Beschichtung liegt im Allgemeinen im Bereich von ca. 10 bis 8000 nm, vorzugsweise 30 bis 4000 nm.

**Coronabehandlung**

Zur Einstellung weiterer gewünschter Eigenschaften kann die Folie auch corona- bzw. flammbehandelt sein. Die Behandlungsintensität ist bevorzugt so gewählt, dass die Oberflächenspannung der Folie im allgemeinen über 45 mN/m liegt.

**Hydrolysebeständigkeit**

In einer Ausführungsform kann die Thermoplastfolie hydrolysebeständig ausgerüstet sein. Als Hydrolysestabilisatoren wirksam sind zum einen Verbindungen, die die Hydrolyse von Esterbindungen unterdrücken oder verlangsamen. Das sind beispielsweise phenolische Stabilisatoren. Dazu gehören sterisch gehinderte Phenole, Thiobisphenole, Alkyliden-bisphenole, Alkylphenole, Hydroxybenzylverbindungen, Acylamino-phenole und Hydroxyphenylpropionate (insbesondere (3,5-Di-*tert.*-butyl-4-hydroxy-phenyl)-propionsäureester des Pentaerythrits oder des 1-Octadecanols, erhältlich unter der Bezeichnung ®Irganox von Ciba Specialty Chemicals). Diese Verbindungen sind beispielsweise beschrieben in der Monographie "Kunststoffadditive" von Gächter und Müller, 2. Aufl., Carl Hanser Verlag. Der Anteil der phenolischen Stabilisatoren beträgt allgemein 0,1 bis 8,0 Gew.-%, bevorzugt 0,2 bis 5,0 Gew.-%, jeweils bezogen auf das Gewicht der Folie bzw. der damit ausgerüsteten Schicht (im Fall der mehrschichtigen Folie).

Die genannten phenolischen Stabilisatoren werden vorzugsweise kombiniert mit organischen Phosphiten, insbesondere mit Triarylphosphiten (erhältlich beispielsweise unter der Bezeichnung ®Irgafos 168 von Ciba Specialty Chemicals). Diese sind in der Lage, Peroxide abzubauen und wirken damit als Sekundärstabilisatoren. Das Gewichtsverhältnis von phenolischen Stabilisatoren zu organischen Phosphiten beträgt dabei allgemein 10:90 bis 90:10. Mischungen von primären und sekundären Hydrolysestabilisatoren sind ebenfalls kommerziell erhältlich, beispielsweise unter den Bezeichnungen ®Irganox B 561 oder ®Irganox B 225.

Als Hydrolysestabilisatoren wirksam sind zum anderen Verbindungen, die bereits durch Hydrolyse gebrochene Bindungen wiederherstellen können. Um aus einer Hydroxy- und einer Carboxygruppe wieder eine Esterbindung herzustellen, eignen sich unter anderem monomere oder polymere Carbodiimide (speziell Dicyclohexylcarbodiimid oder aromatische polymere Carbodiimide, wobei von den polymeren Carbodiimiden solche mit einem Molekulargewicht von 2.000 bis 50.000, erhältlich unter der Bezeichnung ®Stabaxol P von Rhein Chemie GmbH, Mannheim, besonders bevorzugt sind), daneben auch Oxazoline. Der Anteil dieser Verbindungen beträgt allgemein0,1 bis 5,0 Gew.-%, bevorzugt 0,2 bis 3,0 Gew.-%, jeweils bezogen auf das Gewicht der einschichtigen Folie bzw. der damit ausgerüsteten Schicht der mehrschichtigen Folie.

Eine bevorzugte erfindungsgemäße Folie enthält sowohl Verbindungen, die die Hydrolysegeschwindigkeit

herabsetzen, als auch Verbindungen, die Esterbindungen wiederherstellen können. Sie ist besonders resistent gegen Feuchtigkeit oder Wasser. In einer bevorzugten Ausführungsform enthält die Folie demgemäß 0,1 bis 5Gew.-% an polymeren aromatischen Carbodiimiden und 0,1 bis 5 Gew.-% eines Blends aus 30 bis 90 Gew.-% eines organischen Phosphits (insbesondere eines Triarylphosphits) und 70 bis 10 Gew.-% eines Hydroxyphenylpropionats.

Weiterhin geeignete Hydrolysestabilisatoren sind Mischungen von Glycerinestern oder reine Glycerinester, wobei Glycerinester durch die folgende Formel beschrieben sind: $CH_2OR_1$-$CHOR_2$-$CH_2OR_3$, wobei $R_1$, $R_2$ und $R_3$ gleich oder verschieden sind und die folgende Bedeutung haben:

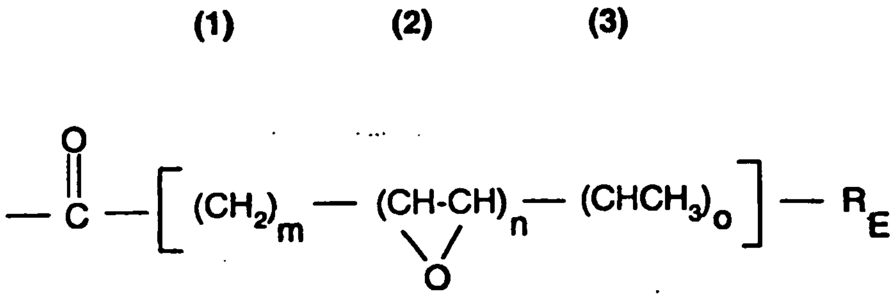

wobei

$R_E$ = $CH_3$ oder H und
m = 1 bis 40, bevorzugt 7 bis 20, besonders bevorzugt 10 bis 16
n = 0 bis 10, bevorzugt 1 bis 4, besonders bevorzugt 2 bis 3,
o = 0 bis 4, bevorzugt 0, ist und

wobei die Reihenfolge der einzelnen Methylen (-$CH_2$)- (1), Epoxid (CHOCH)- (2) und ($CHCH_3$)- (3) Gruppen beliebig ist, wobei aber bevorzugt mindestens 2 Methylengruppen (1) und besonders bevorzugt 7 Methylengruppen (1) auf die Carbonylgruppe folgen, bevor eine oder mehrere der Gruppen (2) oder (3) und wieder (1) folgen.

Geeignete epoxidierte Fettsäureglyceride der oben genannten Art sind beispielsweise epoxidiertes Sojabohnenöl, epoxidiertes Leinöl, epoxidiertes Sonnenblumenöl und epoxidiertes Fischöl. Als besonders geeignet hat sich das Produkt ®Polybio Hystab 10 der Fa. Schäfer Additivsysteme GmbH (Altrip, DE) erwiesen.

Der Anteil aller Hydrolysestabilisatoren zusammen beträgt bevorzugt 0,2 bis 16,0Gew.-%, bevorzugt 0,5 bis 14,0 Gew.-%, jeweils bezogen auf das Gewicht der Folie bzw. der damit ausgerüsteten Schicht der mehrschichtigen Folie.

In der mehrschichtigen Ausführungsform sind der oder die Hydrolysestabilisatoren vorzugsweise in der Basisschicht enthalten. Jedoch können nach Bedarf auch die Deckschichten und/oder eventuell vorhandene Zwischenschichten mit Hydrolysestabilisatoren ausgerüstet sein.

**Niedriger Schrumpf**

Der Schrumpf der Folie lässt sich durch entsprechende Wahl der Fixiertemperatur und der Rahmengeometrie über einen weiten Bereich von 0 bis etwa 5 % in Längs- und Querrichtung einstellen. Bevorzugt zeigt die Folie einen niedrigen Schrumpf. Das bedeutet, dass sie in Längs- wie auch in Querrichtung weniger als 2,5 %, bevorzugt weniger als 2,0 %, besonders bevorzugt weniger als 1,8 % schrumpft, wenn sie 15 min lang auf 150 °C erhitzt wurde (DIN 40 634). Diese Schrumpfwerte können über das Herstellverfahren wie auch durch eine anschließende Off-line-Nachbehandlung erreicht werden. Bei der Off-line-Nachbehandlung wird die Folie weitestgehend ohne Zug durch einen Wärmeofen geführt, wobei sie einer Temperatur im Bereich von 160 bis 210 °C 30 Sekunden bis 2 Minuten lang ausgesetzt wird. Beim Herstellprozess kann der Schrumpf durch Einstellung der Thermofixiertemperatur eingestellt werden. Die Thermofixiertemperatur liegt zwischen 180 und 260 °C, insbesondere zwischen 220 und 250 °C.

**UV-Stabilisierung**

Die erfindungsgemäße Folie kann UV-stabil ausgerüstet sein. Licht, insbesondere der ultraviolette Anteil der Sonnenstrahlung, d. h. der Wellenlängenbereich von 280 bis 400 nm, induziert bei Thermoplasten Abbauvorgänge, als deren Folge sich nicht nur das visuelle Erscheinungsbild durch eintretende Farbänderung bzw. Vergilbung ändert, sondern durch die auch die mechanisch-physikalischen Eigenschaften der Folien aus den Thermoplasten äußerst negativ beeinflusst werden. Die Unterbindung dieserphotooxidativen Abbauvorgänge ist von erheblicher technischer und wirtschaftlicher Bedeutung, da andernfalls die Anwendungsmöglichkeiten von zahlreichen Thermoplasten drastisch eingeschränkt sind. Polyethylenterephthalate beginnenbeispielsweise schon unterhalb von 360 nm UV-Licht zu absorbieren, ihre Absorption nimmt unterhalb von 320 nm beachtlich zu und ist unterhalb von 300 nm sehr ausgeprägt. Die maximale Absorption liegt im Bereich zwischen 280 und 300 nm. In Gegenwart von Sauerstoff werden dann hauptsächlich Kettenspaltungen beobachtet, jedoch keine Vernetzungen. Kohlenmonoxid, Kohlendioxid und Carbonsäuren stellen die mengenmäßig überwiegenden Photooxidationsprodukte dar. Neben der direkten Photolyse der Estergruppen müssen noch Oxidationsreaktionen in Erwägung gezogen werden, die über Peroxidradikale ebenfalls die Bildung von Kohlendioxid zur Folge haben. Die Photooxidation von Polyethylenterephthalaten kann auch über Wasserstoffabspaltung in a-Stellung der Estergruppen zu Hydroperoxiden und deren Zersetzungsprodukten sowie zu damit verbundenen Kettenspaltungen führen (H. Day, D. M. Wiles, J. Appl. Polym. Sci. 16 [1972] S. 203).

UV-Stabilisatoren, d.h. UV-Absorber als Lichtschutzmittel, sind chemische Verbindungen, die in die physikalischen und chemischen Prozesse des lichtinduzierten Abbaus eingreifen. Ruß und andere Pigmente können teilweise einen Lichtschutz bewirken. Diese Substanzen sind jedoch für transparente Folien ungeeignet, da sie zur Verfärbung oder Farbänderung führen. Geeignete UV-Stabilisatoren als Lichtschutzmittel sind UV-Stabilisatoren, die mindestens 70 %, bevorzugt mindestens 80 %, besonders bevorzugt mindestens 90 %, des UV-Lichts im Wellenlängenbereich von 180 bis 380 nm, vorzugsweise 280 bis 350 nm, absorbieren. Besonders geeignete UV-Stabilisatoren sind zudem im Temperaturbereich von 260 bis 300 °C thermisch stabil, d.h. sie zersetzen sich nicht in Spaltprodukte und gasen nicht aus. Geeignete UV-Stabilisatoren als Lichtschutzmittel sind beispielsweise 2-Hydroxy-benzophenone, 2-Hydroxy-benzotriazole, nickelorganische Verbindungen, Salicylsäureester, Zimtsäureester-Derivate, Resorcin-monobenzoate, Oxalsäure-anilide, Hydroxybenzoesäureester, Benzoxazinone, sterisch gehinderte Amine und Triazine, wobei die 2-Hydroxybenzotriazole, die Benzoxazinone und die Triazine bevorzugt sind. Es war überraschend, dass der Einsatz von UV-Stabilisatoren in Kombination mit Hydrolysestabilisatoren zu brauchbaren Folien mit hervorragenden Eigenschaften führt.

Aus der Literatur sind UV-Stabilisatoren bekannt, die UV-Strahlung absorbieren und somit Schutz bieten. Der Fachmann hätte dann wohl einen dieser bekannten und handelsüblichen UV-Stabilisatoren eingesetzt, dabei jedoch festgestellt, dass der UV-Stabilisator eine mangelnde thermische Stabilität hat und sich bei Temperaturen zwischen 200 und 240 °C zersetzt oder ausgast. Um die Folie nicht zu schädigen, hätte er große Mengen (ca. 10 bis 15 Gew.-%) an UV-Stabilisator einarbeiten müssen, damit dieser das UV-Licht wirklich wirksam absorbiert. Bei diesen hohen Konzentrationen vergilbt jedoch die Folie schon in kurzer Zeit nach der Herstellung. Auch die mechanischen Eigenschaften werden negativ beeinflusst. Beim Verstrecken tauchen ungewöhnliche Probleme auf, wie Abrisse wegen mangelnder Festigkeit, d.h. E-Modul, Düsenablagerungen, was zu Profilschwankungen führt, Ablagerung von UV-Stabilisator auf den Walzen, was zur Beeinträchtigung der optischen Eigenschaften (starke Trübung, Klebedefekt, inhomogene Oberfläche) führt, und Ablagerungen im Streck- und Fixierrahmen, die auf die Folie tropfen. Es war daher überraschend, dass bereits mit niedrigen Konzentrationen erfindungsgemäßer UV-Stabilisatoren ein hervorragender UV-Schutz erzielt wird.

In einer ganz besonders bevorzugten Ausführungsform enthält die erfindungsgemäße Folie als UV-Stabilisator 0,1 bis 5,0 Gew.-% 2-(4,6-Diphenyl-[1,3,5]triazin-2-yl)-5-hexyloxy-phenol der Formel

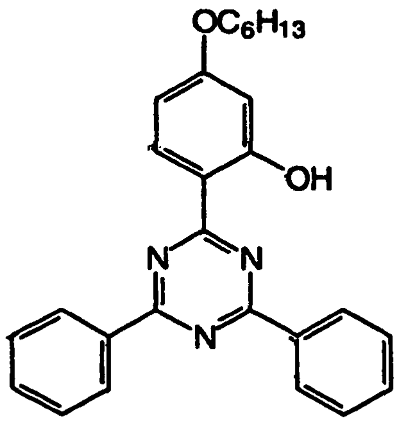

oder 0,1 bis 5,0 Gew.-% 2,2'-Methylen-bis-[6-benzotriazol-2-yl-4-(1,1,2,2-tetramethylpropyl)-phenol] der Formel

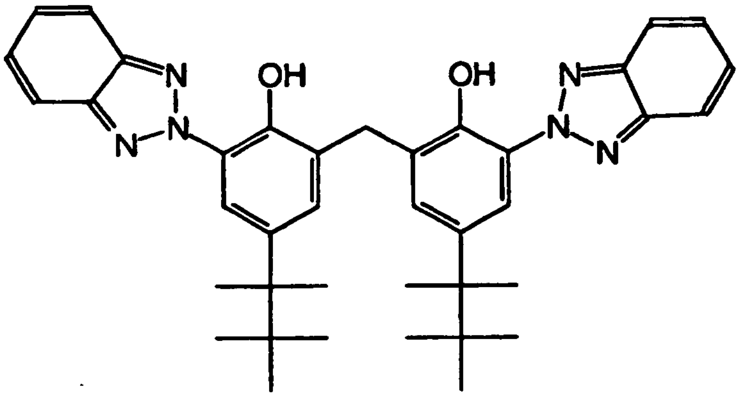

oder 0,1 bis 5,0 Gew.-% 2,2'-(1,4-Phenylen)-bis-([3,1]benzoxazin-4-on) der Formel

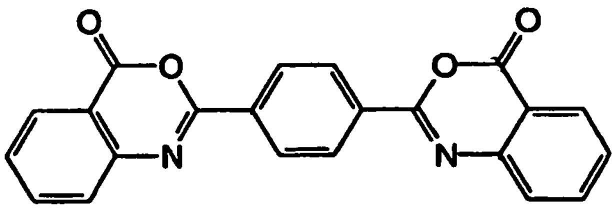

In einer weiteren Ausführungsform können auch Mischungen dieser UV-Stabilisatoren oder Mischungen von mindestens einem dieser UV-Stabilisatoren mit anderen UV-Stabilisatoren eingesetzt werden, wobei die Gesamtkonzentration an Lichtschutzmittel vorzugsweise zwischen 0,1 und 5,0 Gew.-%, besonders bevorzugt im Bereich von 0,5 bis 3,0 Gew.-%, liegt, bezogen auf das Gewicht der ausgerüsteten Schicht.

**Flammschutz**

In einer weiteren Ausführungsform kann die erfindungsgemäße Folie flammhemmend ausgerüstet sein. Flammhemmend bedeutet, dass die Folie in einer so genannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann. Die Folie enthält in diesem Fall ein Flammschutzmittel, das bevorzugt über die so genannte Masterbatch-Technologie direkt bei der Folienherstellung zudosiert wird, wobei der Anteil des Flammschutzmittels im Bereich von ca. 0,2 bis 30,0 Gew.-%, bevorzugt 0,5 bis 25 Gew.-%, besonders bevorzugt von 1,0 bis 20,0 Gew.-%, bezogen auf das Gewicht der damit ausgerüsteten Schicht, liegt. Im Masterbatch beträgt der Anteil des Flammschutzmittels allgemein 5 bis 60 Gew.-%, bevorzugt 10 bis 50 Gew.-%, jeweils bezogen auf das Gesamtgewicht des Masterbatches. Geeignete Flammschutzmittel sind beispielsweise Bromverbindungen, Chlorparaffine und andere Chlorverbindungen, Antimontrioxid und Aluminiumtrihydrate. Die Halogenverbindungen haben u. U. den Nachteil, dass dabei halogenhaltige Nebenprodukte entstehen können. Im Brandfall können sich Halogenwasserstoffe bilden. Nachteilig ist auch die geringere Lichtbeständigkeit einer damit ausgerüsteten Folie. Weitere geeignete Flammschutzmittel sind beispielsweise organische Phosphorverbindungen wie Carboxyphosphinsäuren, deren Anhydride und Methanphosphonsäuredimethylester. Wesentlich ist, dass die organische Phosphorverbindung im Thermoplast löslich ist, da andernfalls die geforderten optischen Eigenschaften nicht erfüllt werden.

Als besonders geeignet haben sich organische Phosphorverbindungen gezeigt, die in die Thermoplastkette einpolymerisiert sind, da dadurch Ausgasungen im Herstellprozess vermieden werden können.

In einer besonderen Ausführungsform enthält die Folie Bis(2-hydroxyethyl)-(6H-dibenz[c,e][1,2]oxaphosphorin-6-ylmethyl)succinat-P-oxid als Flammschutzmittel.

**Siegelfähigkeit**

Wo eine sehr gute Siegelfähigkeit gefordert wird und wo diese Eigenschaft nicht über eine On-line Beschichtung erreicht werden kann, ist die erfindungsgemäße Folie bevorzugt dreischichtig aufgebaut und umfasst dann in einer besonderen Ausführungsform die Basisschicht B, eine siegelfähige Deckschicht A und eine gegebenenfalls siegelfähige Deckschicht C. Ist die Deckschicht C ebenfalls siegelfähig, dann sind die beiden Deckschichten vorzugsweise identisch.

Die bevorzugt durch Coextrusion auf die Basisschicht B aufgebrachte siegelfähige Deckschicht A ist bevorzugt auf Basis von Polyestercopolymeren aufgebaut und besteht im wesentlichen aus Copolyestern, die überwiegend aus Isophthalsäure-, Bibenzolcarbonsäure- und/oder Terephthalsäure-Einheiten und aus EthylenglykolEinheiten zusammengesetzt sind. Die restlichen Monomereinheiten stammen aus anderen aliphatischen, cycloaliphatischen oder aromatischen Diolen bzw. Dicarbonsäuren, wie sie auch in der Basisschicht vorkommen können. Die bevorzugten Copolyester, die die gewünschten Siegeleigenschaften bereitstellen, sind solche, die aus Etylenterephthalat- und Ethylenisophthalat-Einheiten aufgebaut sind. Der Anteil an Ethylenterephthalat beträgt bevorzugt 40 bis 95 Mol-% und der entsprechende Anteil an Ethylenisophthalat 60 bis 5 Mol-%. Bevorzugt sind Copolyester, bei denen der Anteil an Ethylenterephthalat 50 bis 90 Mol-% und der entsprechende Anteil an Ethylenisophthalat 50 bis 10 Mol-% beträgt und ganz bevorzugt sind Copolyester, bei denen der Anteil an Ethylenterephthalat 60 bis 85 Mol-% und der entsprechende Anteil an Ethylenisophthalat 40 bis 15 Mol-% beträgt.

Für die Deckschicht C und für eventuelle Zwischenschichten können prinzipiell die gleichen Polymeren verwendet werden, die auch in der Basisschicht Verwendung finden.

Die gewünschten Siegel- und Verarbeitungseigenschaften der erfindungsgemäßen Folie werden aus der Kombination der Eigenschaften des verwendeten Copolyesters für die siegelfähige Deckschicht und den Topographien der siegelfähigen Deckschicht A und der gegebenenfalls siegelfähigen Deckschicht C erhalten.

Die Siegelanspringtemperatur von bevorzugt 110 °C und die Siegelnahtfestigkeit von bevorzugt mindestens 1,3 N/15 mm werden z. B. erreicht, wenn für die siegelfähige Deckschicht A die oben näher beschriebenen Copolymere verwendet werden. Die besten Siegeleigenschaften der Folie erhält man, wenn dem Copolymeren keine weiteren Additive, insbesondere keine anorganischen oder organischen Filler zugegeben werden. Für diesen Fall erhält man bei vorgegebenem Copolyester die niedrigste Siegelanspringtemperatur und die höchsten Siegelnahtfestigkeiten. Allerdings ist in diesem Fall das Handling der Folie verschlechtert, da die Oberfläche der siegelfähigen Deckschicht A zum Verblocken neigt. Die Folie lässt sich schwieriger wickeln und ist für eine Weiterverarbeitung auf schnelllaufenden Verpakkungsmaschinen nur eingeschränkt geeignet. Zur Verbesserung des Handlings der Folie und der Verarbeitbarkeit ist es notwendig, die siegelfähige Deckschicht A zu modifizieren. Dies geschieht am besten mit Hilfe von geeigneten Antiblockmitteln einer ausgewählten Größe, die in einer bestimmten Konzentration der Siegelschicht zugegeben werden, und zwar derart, dass einerseits das Verblocken minimiert und andererseits die Siegeleigenschaften nur unwesentlich verschlechtert werden. Antiblockmittel wie z. B. Siliciumdioxid sind beschrieben in EP-A-0 515 096.

**Verfahren**

Die Polyesterfolien können nach bekannten Verfahren aus einem Polyesterrohstoff mit ggf. weiteren Rohstoffen sowie dem optischen Aufheller, dem Bariumsulfat, dem Titandioxid, gegebenenfalls dem oder den Farbstoffen und/oder weiteren Additiven, wie beispielsweise Flammschutzmittel, UV-Stabilisator oder Hydrolysestabilisator in den beschriebenen Mengen sowie weiteren üblichen Additiven in üblicher Menge von bevorzugt 0,1 bis 10 Gew.-% sowohl als Monofolien als auch als mehrschichtige, ggf. coextrudierte Folien mit gleichen oder unterschiedlich ausgebildeten Oberflächen hergestellt werden.

Bei dem bevorzugten Extrusionsverfahren zur Herstellung der Polyesterfolie wird das aufgeschmolzene Polyestermaterial zusammen mit den anderen Bestandteilen (bevorzugt als Masterbatches) durch eine Schlitzdüse extrudiert und als weitgehend amorphe Vorfolie auf einer Kühlwalze abgeschreckt. Diese Folie wird anschließend erneut erhitzt und in Längs- und Querrichtung bzw. in Quer- und in Längsrichtung bzw. in Längs-, in Quer- und nochmals in Längsrichtung und/oder Querrichtung gestreckt. Die Strecktemperaturen liegen bevorzugt bei $T_g$ + 10 °C bis $T_g$ + 60 °C ($T_g$ = Glastemperatur), das Streckverhältnis der Längsstreckung liegt bevorzugt bei 2 bis 5, insbesondere bei 2,5 bis 4,5, das der Querstreckung bei 2 bis 5, insbesondere bei 3 bis 4,5, und das der ggf. durchgeführten zweiten Längsstreckung bei 1,1 bis 3. Die erste Längsstreckung kann ggf. gleichzeitig mit der Querstreckung (Simultanstreckung) durchgeführt werden. Anschließend folgt die Thermofixierung der Folie bei Ofentemperaturen von bevorzugt 200 bis 260 °C, insbesondere bei 220 bis 250 °C. Anschließend wird die Folie abgekühlt und aufgewickelt.

Es hat sich völlig unerwartet herausgestellt, dass eine wesentliche Einflussgröße auf die optischen Eigenschaften (Transparenz), die Durchschlagsfestigkeit, die Dichte und die Ausbildung von Vakuolen die Verfahrensparameter der Längsstreckung sind. Zu den Verfahrensparametern der Längsrichtung gehören insbesondere das Längsstreckverhältnis und die Längsstrecktemperatur. Völlig überraschend konnte durch Variation des Längsstreckverhältnisses die Transparenz, die Durchschlagsfestigkeit, die Dichte und die Ausbildung von Vakuolen stark beeinflusst werden.

Durch die überraschende Kombination der genannten Eigenschaften eignen sich die erfindungsgemäßen Folien für eine Vielzahl verschiedener Innen- und Außenanwendungen, beispielsweise Elektroisolieranwendungen, für Innenraumverkleidungen, für Messebau und Messeartikel, für Displays, für Schilder, für Etiketten, für Schutzverglasungen von Maschinen und Fahrzeugen, im Beleuchtungssektor, im Laden- und Regalbau, als Werbeartikel, Kaschiermedium, für medizinische Anwendungen und für Lebensmittelanwendungen.
Die nachstehende Tabelle (Tabelle 1) fasst die wichtigsten erfindungsgemäßen Folieneigenschaften noch einmal zusammen.

**Tabelle 1**

| | | bevorzugt | besonders bevorzugt | ganz besonders bevorzugt | Einheit | Messmethode |
|---|---|---|---|---|---|---|
| Gehalt $BaSO_4$ | | 0,1 - 40 | 0,5 - 25 | 1,0 - 20 | Gew.-% | |
| Gehalt $TiO_2$ | | 0.1 - 40 | 0,5 - 25 | 1,0 - 20 | Gew.-% | |
| Optischer Aufheller | | 1 - 25000 | 2 - 15000 | 3 - 10000 | ppm | |
| Lösliche Farbstoffe | | 1 - 100 | 1 - 30 | 1 - 20 | ppm | |
| Transparenz | 50 µm | 1 - 20 | 2 - 17 | 3 - 15 | % | ASTM-D 1003-00 |
| | 200 µm | 0,5 - 8 | 0,6 - 7 | 0,7 - 6 | | |
| Gelbwert YID | 50 µm | 1 - 15 | 2 - 14 | 3 - 13 | | ASTM 1925-70 |
| | 200 µm | 1 - 50 | 2 - 45 | 3 - 40 | | |
| Weißgrad | | > 85 | > 87 | > 90 | % | Berger |
| Durchschlagfestigkeit (50 µm-Folie) | | > 150 | > 160 | > 170 | kV/mm | DIN 53481 |
| Void-Index | | > 87 | > 88 | > 89 | % | |
| Dichte | | > 1,390 | > 1,392 | > 1,394 | $kg/dm^3$ | ASTM-D 1505 Methode C |

Die Erfindung wird im Folgenden anhand von Ausführungsbeispielen näher erläutert.
Die Messung der einzelnen Eigenschaften erfolgt dabei gemäß den folgenden Normen bzw. Verfahren.

**Messmethoden**

**Lichttransmission/Transparenz**

Unter der Lichttransmission/Transparenz ist das Verhältnis des insgesamt durchgelassenen Lichtes zur einfallenden Lichtmenge zu verstehen.
Die Lichttransmission wird mit dem Messgerät "Hazegard plus" der Fa. Byk-Gardner GmbH, DE, nach ASTM D 1003-00 gemessen.

**Mittlere Dicke**

Die mittlere Dicke $d_F$ wird bei bekannter Länge, Breite und Dichte einer Folie aus deren Gewicht bestimmt. Gemessen wird das Gewicht eines auf dem Zuschneidetisch vorbereiteten Folienstreifens, der aus der Mitte eines über die ganze Rollenbreite gehenden Musters genommen wird. Die Berechnung von $d_F$ erfolgt nach der Formel

$$d_F[\mu m] = \frac{m[g]}{l[mm] \cdot b[mm] \cdot d[g/cm^3]} \cdot 10^{-6}$$

wobei gilt:

m = Masse des untersuchten Folienstückes
l = Länge der Probe
b = Breite der Probe
d = Dichte des untersuchten Materials (für Polyester z.B.1,395 $g/cm^3$

Die einzelnen Probestreifen werden nach dem Zuschneiden auf einer Analysenwaage der Fa. Mettler PM 200 (Höchstlast 200 g) verwogen. Ein daran angeschlossener Computer vom Typ HP Vectra ES/12 übernimmt nach der Eingabe von Maschine und Rollennummer alle Parameter aus dem OPUS-Programm und errechnet damit die mittlere Dicke.

**Gelbwerte**

Der Gelbwert YID wird in Transmission für gemäß der Norm ASTM 1925-70 mit dem Messgerät Color-Sphere der Fa. Byk-Gardner gemessen.

Messbedingungen für Gerät Color-Sphere der Fa. Byk-Gardner: Die verwendete Geometrie ist d/8 mit Glanz, der Messbereich ist 400 bis 700 nm, die spektrale Auflösung ist 20 nm, die verwendete Lichtart ist D65, der verwendete Beobachter ist 10°, der Durchmesser der Messblende liegt bei 30 mm.

**Weißgrad**

Der Weißgrad wird nach Berger bestimmt, wobei in der Regel mehr als 20 Folienlagen aufeinander gelegt werden. Die Bestimmung des Weißgrades erfolgt mit Hilfe des elektrischen Remissionsphotometers ®"ELREPHO" der Fa. Zeiss, Oberkochem (DE), Normlichtart C, 2° Normalbeobachter. Der Weißgrad wird als WG = RY + 3RZ - 3RX definiert.

WG = Weißgrad, RY, RZ, RX = entsprechende Reflexionsfaktoren bei Einsatz des Y-, Z- und X-Farbmessfilters. Als Weißstandard wird ein Pressling aus Bariumsulfat (DIN 5033, Teil 9) verwendet. Eine ausführliche Beschreibung ist z.B. in Hansl Loos "Farbmessung", Verlag Beruf und Schule, Itzehoe (1989), beschrieben.

**Standardviskosität (SV) und intrinsische Viskosität (IV)**

Die Standardviskosität SV wurde - angelehnt an DIN 53726 - als 1%ige Lösung in Dichloressigsäure (DCE) bei 25 °C gemessen. SV (DCE) = ($\eta_{rel}$ -1) x 1000. Die intrinsische Viskosität (IV) berechnet sich wie folgt aus der Standardviskosität (SV)

$$IV = [\eta] = 6{,}907 \cdot 10^{-4} \cdot SV\,(DCE) + 0{,}063096\ [dl/g]$$

**Oberflächendefekte, homogene Einfärbung**

Die Oberflächendefekte und die homogene Einfärbung werden visuell bestimmt.

**Durchschlagsfestigkeit**

Die elektrische Durchschlagsfestigkeit wird nach DIN 53481 bei Wechselspannung (50 Hz) als Mittelwert von 10 Messstellen angegeben.

**Dichte**

Die Dichte wird nach ASTM-D 1505 Methode C bestimmt.

Als Basis für die berechnete Dichte wird eine Dichte von PET von 1,40 $kg/dm^3$ und für Bariumsulfat von 4,4 $kg/dm^3$ und für Titandioxid von 4,2 für die Rutil-Modifikation und von 3,9 $kg/dm^3$ für die Anatas-Modifikation gewählt.

**Klimatest (Feuchte Langzeittest)**

Im Klimatest (Feuchte Langzeittest) wird die Folie 1000 h bei 85 °C und 95 % relativer Luftfeuchte im Autoklaven gelagert. Nach dieser Lagerung wird die Reißfestigkeit in Längs- und Querrichtung nach ISO 527-1-2 gemessen. Die

Reißfestigkeit muß bei >100 N/15mm liegen, um die Anforderungen der Automobilindustrie zu erfüllen.

**Hochtemperaturfestigkeit**

Die Hochtemperaturfestigkeit wird gemäß IPC TM 650 2.4.9 nach 1000 h Temperung bei 130 °C im Umlufttrockenschrank bestimmt. Nach dieser Temperung muss die Reißfestigkeit nach ISO 527-1-2 bei >100 N/15mm liegen, um die Anforderungen der Automobilindustrie zu erfüllen.

**Mechanische Eigenschaften**

Der E-Modul und die Reißfestigkeit werden in Längs- und Querrichtung nach ISO 527-1-2 gemessen.

**Schrumpf**

Der Schrumpf wird gemäß DIN 40634 bei 150 °C und 15 Minuten Verweildauer gemessen.

**Bewitterung (beidseitig), UV-Stabilität**

Die UV-Stabilität wurde nach der Testspezifikation ISO 4892 wie folgt geprüft:

| | |
|---|---|
| Testgerät | Atlas Ci 65 Weather Ometer (Fa. Atlas, GB) |
| Testbedingungen | ISO 4892, d.h. künstliche Bewitterung |
| Bestrahlungszeit | 1000 Stunden (pro Seite) |
| Bestrahlung | 0,5 $W/m^2$, 340 nm |
| Temperatur | 63 °C |
| Relative Luftfeuchte | 50 % |
| Xenonlampe | innerer und äußerer Filter aus Borosilikat |
| Bestrahlungszyklen | 102 Minuten UV-Licht, dann 18 Minuten UV-Licht mit Wasserbesprühung der Proben, dann wieder 102 Minuten UV-Licht usw. |

Alle mit UV-Stabilisator ausgerüsteten Folien wurden nach der Testspezifikation ISO 4892 beidseitig je 1000 Stunden pro Seite mit dem Atlas Ci 65 Weather Ometer der Fa. Atlas bewittert und anschließend bezüglich der mechanischen Eigenschaften, der Verfärbung, der Oberflächendefekte, der Trübung und des Glanzes geprüft.

**Brandverhalten**

Das Brandverhalten wurde nach DIN 4102 Teil 2, Baustoffklasse B2 und nach DIN 4102 Teil 1, Baustoffklasse B1 ermittelt.

**Bestimmung der Siegelanspringtemperatur (Mindestsiegeltemperatur)**

Mit dem Siegelgerät HSG/ET der Fa. Brugger (DE) wurden heißgesiegelte Proben (Siegelnaht 20 x 100 mm) hergestellt, wobei die Folie bei unterschiedlichen Temperaturen mit Hilfe zweier beheizter Siegelbacken bei einem Siegeldruck von 2 bar und einer Siegeldauer von 0,5 s gesiegelt wurde. Aus den gesiegelten Proben wurden Prüfstreifen von 15 mm Breite geschnitten. Die T-Siegelnahtfestigkeit wurde wie bei der Bestimmung der Siegelnahtfestigkeit gemessen. Die Siegelanspringtemperatur ist die Temperatur, bei der eine Siegelnahtfestigkeit von mindestens 0,5 N/15 mm erreicht wird.

**Siegelnahtfestigkeit**

Zur Bestimmung der Siegeinahtfestigkeit wurden zwei 15 mm breite Folienstreifen übereinandergelegt und bei 130 °C, einer Siegelzeit von 0,5 s und einem Siegeldruck von 2 bar (Gerät: Fa. Brugger, Typ NDS, DE, einseitig beheizte Siegelbacke) gesiegelt. Die Siegelnahtfestigkeit wurde nach der T-Peel-Methode bestimmt.

**Oberflächenspannung**

Die Oberflächenmessung wird mit der Kontaktwinkelmessung-Methode gemessen. Die Bestimmung erfolgt mit dem Goniometer G1 der Fa. Krüss GmbH, DE. Als Flüssigkeit wird destilliertes Wasser verwendet. Die Probe wird aus der Mitte eines Lagenpaketes entnommen und direkt gemessen.

In den nachstehenden Beispielen und Vergleichsbeispielen handelt es sich jeweils um weiß-opake Folien, die auf der beschriebenen Extrusionsstraße hergestellt werden. Das Längsstreckverhältnis beträgt 1:3,1, sofern nicht anders angegeben.

**Beispiele**

Für die Herstellung der weiß-opaken Folien wurden folgende Rohstoffe verwendet:

- RS1 Rohstoff, der neben PET 18 Gew.-% Bariumsulfat (Blanc fixe XR-HX, Sachtleben Chemie), 600 ppm optischen Aufheller (Hostalux, Clariant, DE) und 4 ppm blauen Farbstoff (®Polysynthren Blue RLS, Fa. Clariant) enthält. Der SV-Wert des Rohstoffes liegt bei 810.
- RS2 Rohstoff, der neben PET 50 Gew.-% Titandioxid enthält (Rutil-Typ, 0,2 μm Teilchendurchmesser, Fa. Kerr McGee). Der Rohstoff hat einen SV-Wert von ca. 730.
- RS3 Rohstoff, der neben PET 4 ppm blauen Farbstoff (®Polysynthren Blue RLS, Fa. Clariant) sowie 2 ppm roten Farbstoff (®Macrolex Rot 5B Gran, Fa. Lanxess) enthält, jedoch keinerlei Pigmente ("Klarrohstoff"). Der SV-Wert liegt bei 810. Der Rohstoff wurde mittels eines Titan-Polykondensationskatalysators hergestellt.
- RS4 Rohstoff auf Basis von Antimontrioxid als Polykondensationskatalysator, der neben PET keine weiteren Additive enthält.
- RS5 Entspricht RS2, enthält jedoch zusätzlich 300 ppm Hostalux als optischen Aufheller.
- RS6 Rohstoff, der neben PET 22.500 ppm an Siliziumdioxid (®Sylobloc, Fa. Grace, DE) als Antiblockmittel enthält.
- RS7 Rohstoff, der neben PET 20 Gew.-% des UV-Stabilisators ®Tinuvin 1577 (Ciba Specialities, Basel, CH) und 10 ppm blauen Farbstoff (®Polysynthren Blue RLS, Fa. Clariant) enthält.
- RS8 Rohstoff, der neben PET 17,2 Gew.-% Bis(2-hydroxyethyl)-(6H-dibenz[c,e][1,2]oxaphosphorin-6-ylmethyl)succinat-P-oxid enthält, das in die Polymerkette einkondensiert ist.
- RS9 Copolyester aus 78 Mol.-% Ethylenterephthalat und 22 Mol-% Ethylenisophthalat (hergestellt über das Umesterungsverfahren mit Mn als Umesterungskatalysator, Mn-Konzentration: 100 ppm).
- RS10 Rohstoff, der neben PET 20 Gew.-% ®Polybio Hystab 10 (Schäfer Additiv-Systeme GmbH, Altrip, DE) enthält.
- RS11 Analog RS3, enthält zusätzlich 1000 ppm des Hydrolysestabilisators ®Irganox 1010 (Ciba Specialities, Basel, CH).

**Beispiel 1 (B1)**

Es wurde eine 50 μm dicke Folie mit folgender Rezeptur hergestellt:

20 Gew.-% Klarrohstoff RS3
50 Gew.-% arteigenes Regenerat, das aus inhärent angefallenem Folienverschnitt hergestellt wurde.
22 Gew.-% des Rohstoffes RS1
8 Gew.-% des Rohstoffes RS2

In Summe enthält die Folie somit 8 Gew.-% Bariumsulfat, 8 Gew.-% Titandioxid, 264 ppm optischen Aufheller, 0,8 ppm roten Farbstoff sowie 3,36 ppm blauen Farbstoff.

Das Längsstreckverhältnis bei der Herstellung der Folie betrug 1:3,1.

**Beispiel 2 (B2)**

Beispiel 1 wurde wiederholt. Im Unterschied zu Beispiel 1 wurde jedoch eine 250 μm dicke Folie hergestellt. Das Längsstreckverhältnis bei der Herstellung der Folie betrug 2,9.

**Beispiel 3 (B3)**

Beispiel 1 wurde wiederholt. Im Unterschied zu Beispiel 1 betrug das Längsstreckverhältnis bei der Herstellung der Folie 1:3,4.

**Beispiel 4 (B4)**

Analog Beispiel 1 wurde eine 50 μm dicke Folie mit folgender Rezeptur hergestellt:

14 Gew.-% Klarrohstoff RS4
50 Gew.-% arteigenes Regenerat, das aus inhärent angefallenem Folienverschnitt hergestellt wurde.
28 Gew.-% des Rohstoffes RS1
8 Gew.-% des Rohstoffes RS2

In Summe enthält die Folie somit 10 Gew.-% Bariumsulfat, 8 Gew.-% Titandioxid, 336 ppm optischen Aufheller sowie 2,2 ppm blauen Farbstoff.
Das Längsstreckverhältnis bei der Herstellung der Folie betrug analog zu Beispiel 1 auch hier 1:3,1.

**Beispiel 5 (B5)**

Beispiel 4 wurde wiederholt. Im Unterschied zu Beispiel 4 wurde jedoch eine 250 μm dicke Folie hergestellt. Das Längsstreckverhältnis bei der Herstellung der Folie-betrug 2,9.

**Beispiel 6 (B6)**

Beispiel 4 wurde wiederholt. Im Unterschied zu Beispiel 4 betrug das Längsstreckverhältnis bei der Herstellung der Folie 1:3,4.

**Beispiel 7 (B7)**

Beispiel 4 wurde wiederholt. In Abänderung zu Beispiel 4 wurde anstelle der RS2 der RS5 verwendet.
Die Folie enthielt demnach 10 Gew.-% Bariumsulfat, 8 Gew.-% Titandioxid, 384 ppm optischen Aufheller sowie 2,2 ppm blauen Farbstoff.

**Beispiel 8 (B8)**

Es wurde eine 50 μm dicke ABA-Folie mit folgender Rezeptur hergestellt:

Coexschichten A, je 2 μm dick
93 Gew.-% des Rohstoffes RS4
7 Gew-% des Rohstoffes RS6

Basisschicht B, 46 μm dick

Identisch mit Rezeptur aus Beispiel 4

**Beispiel 9 (B9)**

Die Folie gemäß Beispiel 1 (B1) wird nach der Längsstreckung mittels "Reverse gravure-roll coating"-Verfahren mit einer wässrigen Dispersion einseitig beschichtet. Die Dispersion enthält neben Wasser 4,2 Gew.-% hydrophilischen Polyester (5-Nasulfoisophthalsäurehaltigen PET/IPA-Polyester, ®SP41, Ticona, US), 0,15 Gew.-% kolloidales Siliziumdioxid (®Nalco 1060, Deutsche Nalco Chemie, DE) als Antiblockmittel sowie 0,15 Gew.-% Ammoniumcarbonat (Merck, DE) als pH-Puffer. Das Naßantragsgewicht beträgt 2 $g/m^2$ pro beschichtete Seite. Nach der Querstreckung liegt die berechnete Dicke der Beschichtung bei 40 nm.

**Beispiel 10 (B10)**

Es wurde eine 50 μm dicke Folie mit folgender Rezeptur hergestellt:

17 Gew.-% Klarrohstoff RS3
50 Gew.-% arteigenes Regenerat, das aus inhärent angefallenem Folienverschnitt hergestellt wurde.
22 Gew.-% des Rohstoffes RS1
8 Gew.-% des Rohstoffes RS2

3 Gew.-% des Rohstoffes RS7

In Summe enthält die Folie somit 8 Gew.-% Bariumsulfat, 8 Gew.-% Titandioxid, 264 ppm optischen Aufheller, 1,2 Gew.-% UV-Stabilisator sowie roten und blauen Farbstoff.

**Beispiel 11 (B11)**

Es wurde eine 50 µm dicke Folie mit folgender Rezeptur hergestellt:

22 Gew.-% des Rohstoffes RS1
8 Gew.-% des Rohstoffes RS2
50 Gew.-% arteigenes Regenerat, das aus inhärent angefallenem Folienverschnitt hergestellt wurde.
20 Gew.-% des Rohstoffes RS8

In Summe enthält die Folie somit 8 Gew.-% Bariumsulfat, 8 Gew.-% Titandioxid, 264 ppm optischen Aufheller, 6,9 Gew.-% Flammschutzmittel sowie roten und blauen Farbstoff.

**Beispiel 12 (B12)**

Es wurde eine 50 µm dicke coextrudierte ABC-Folie mit folgender Rezeptur hergestellt:

Coextrusionsschicht A, 2 µm dick
93 Gew.-% des Rohstoffes RS3
7 Gew-% des Rohstoffes RS6

**Basisschicht B, 46 µm dick**

Identisch mit Rezeptur aus Beispiel 1

Coextrusionsschicht C, 2 µm dick

97 Gew.-% des Rohstoffes RS9
3 Gew-% des Rohstoffes RS6

**Beispiel 13 (B13)**

Es wurde eine 50 µm dicke Folie mit folgender Rezeptur hergestellt:

20 Gew.-% Klarrohstoff RS11
50 Gew.-% arteigenes Regenerat, das aus inhärent angefallenem Folienverschnitt hergestellt wurde.
22 Gew.-% des Rohstoffes RS1
8 Gew.-% des Rohstoffes RS2

In Summe enthält die Folie somit 8 Gew.-% Bariumsulfat, 8 Gew.-% Titandioxid und 264 ppm optischen Aufheller, 400 ppm Irganox 1010 sowie roten und blauen Farbstoff.

**Beispiel 14 (B14)**

Es wurde eine 50 µm dicke Folie mit folgender Rezeptur hergestellt:

10 Gew.-% Klarrohstoff RS3
50 Gew.-% arteigenes Regenerat, das aus inhärent angefallenem Folienverschnitt hergestellt wurde.
22 Gew.-% des Rohstoffes RS1
8 Gew.-% des Rohstoffes RS2
10 Gew.-% des Rohstoffes RS10

In Summe enthält die Folie somit 8 Gew.-% Bariumsulfat, 8 Gew.-% Titandioxid, 264 ppm optischen Aufheller, 4 Gew.-% Hydrolysestabilisator sowie roten und blauen Farbstoff.

**Beispiel 15 (B15)**

Folie aus Beispiel 9 wird in einem Wärmeofen weitestgehend zuglos bei einer Temperatur von 200 °C und einer Verweildauer von 60 Sekunden nachbehandelt.

**Beispiel 16 (B16)**

Analog Beispiel 10 wird eine 50 µm dicke, weiß-opake, UV-stabilisierte Folie hergestellt. Die Folie wird einseitig coronabehandelt. Die Intensität wird so gewählt, dass die Oberflächenspannung bei >45 mN/m liegt.

**Vergleichsbeispiel 1 (VB1)**

Beispiel 1 aus EP-A-1 125 967 wurde nachgestellt.

Demnach wird eine 50 µm dicke, weiß-opake Folie hergestellt, die als Hauptbestandteil Polyethylenterephthalat (RT32, Invista, DE), 18 % Bariumsulfat (Blanc fixe XR-HX, Sachtleben Chemie), 200 ppm optischen Aufheller (®Tinopa, Ciba-Geigy, Basel) und 40 ppm blauen Farbstoff (Sudanblau 2, BASF Ludwigshafen) enthält. Das bei der Folienherstellung eingestellte Längsstreckverhältnis beträgt 3,1.

**Vergleichsbeispiel 2 (VB2)**

Es wurde eine 50 µm dicke Folie mit folgender Rezeptur hergestellt:

16 Gew.-% des Rohstoffes RS2
34 Gew.-% des Rohstoffes RS4
50 Gew.-% arteigenes Regenerat, das aus inhärent angefallenem Folienverschnitt hergestellt wurde.

**Vergleichsbeispiel 3 (VB3)**

Beispiel 1 aus der Anmeldung US 4,780,402 wurde nachgearbeitet. Die 130 µm dicke Folie enthielt demnach 25 Gew.-% Bariumsulfat mit einer mittleren Teilchengröße von 6 µm, keinen optischen Aufheller und keinen Farbstoff.

**Vergleichsbeispiel 4 (VB4)**

Es wurde eine 50 µm dicke Folie mit folgender Rezeptur hergestellt:

34 Gew.-% Klarrohstoff RS3
50 Gew.-% arteigenes Regenerat, das aus inhärent angefallenem Folienverschnitt hergestellt wurde.
16 Gew.-% des Rohstoffes RS2

In Summe enthält die Folie somit 16 Gew.-% Titandioxid sowie roten und blauen Farbstoff, jedoch kein Bariumsulfat und keinen optischen Aufheller.

**Vergleichsbeispiel 5 (VB5)**

Es wurde eine 50 µm dicke Folie mit folgender Rezeptur hergestellt:

3 Gew.-% Klarrohstoff RS3
50 Gew.-% arteigenes Regenerat, das aus inhärent angefallenem Folienverschnitt hergestellt wurde.
44 Gew.-% des Rohstoffes RS1
3 Gew.-% des Rohstoffes RS7

In Summe enthält die Folie somit 16 Gew.-% Bariumsulfat, UV-Stabilisator, optischen Aufheller sowie roten und blauen Farbstoff, jedoch kein Titandioxid.

**Vergleichsbeispiel 6 (VB6)**

Es wurde in Analogie zu Vergleichsbeispiel 5 eine 50 μm dicke Folie mit folgender Rezeptur hergestellt:

6 Gew.-% Klarrohstoff RS3
50 Gew.-% arteigenes Regenerat, das aus inhärent angefallenem Folienverschnitt hergestellt wurde.
44 Gew.-% des Rohstoffes RS1

In Summe enthält die Folie somit 16 Gew.-% Bariumsulfat, optischen Aufheller sowie roten und blauen Farbstoff, jedoch kein Titandioxid und keinen UV-Stabilisator.

Die wichtigsten Eigenschaften der genannten Folien sind in der nachfolgenden Tabelle 2 zusammengefasst.

Dabei zeigt sich, dass die Folien gemäß VB1 bis VB6 insbesondere in der Kombination der Eigenschaften Transparenz, Gelbwert, Weißgrad und Durchsch4agsfestigkeit Defizite gegenüber den erfindungsgemäßen Folien B1 bis B16 aufweisen.

**Tabelle 2** Eigenschaftsprofil der hergestellten Folien

| | | Einheit | B1 | B2 | B3 | B4 | B5 |
|---|---|---|---|---|---|---|---|
| Folienaufbau | | | B | B | B | B | B |
| Dicke | | [µm] | 50 | 250 | 50 | 50 | 250 |
| Transparenz | | [%] | 16,5 | 6,5 | 10,5 | 14,0 | 3,8 |
| Gelbzahl (YID) | | | 9 | 45 | 7 | 5,5 | 33 |
| Weißgrad (Berger) | | | 108 | 107 | 109 | 113 | 112 |
| Reißfestigkeit | längs<br>quer | [N/mm] | | | | | |
| E-Modul | längs<br>quer | [N/mm] | | | | | |
| Dichte | gemessen<br>errechnet | $kg/dm^3$ | 1,41<br>1,57 | 1,48<br>1,57 | 1,39<br>1,57 | 1,42<br>1,59 | 1,49<br>1,59 |
| Void-Index | | % | 89,8 | 94,3 | 88,6 | 89,1 | 93,5 |
| Durchschlagsfestigkeit | | kV/mm | 174 | 98 | 163 | 171 | 96 |
| Klimatest (bestanden ja/nein) | | | | | | | |
| Hochtemperaturbeständigkeit | | | | | | | |
| UV-Stabilität (Absorption) | | [nm] | | | | | |
| Flammstabilität (Brandkl.) | | | | | | | |
| Beschichtung (Haftung) | | | | | | | |
| Mindestsiegeltemperatur (A/A) | | [°C] | | | | | |
| Siegelnahtfestigkeit (A/A) | | [N/15mm] | | | | | |
| Oberflächenspannung | | [mN/m] | | | | | |
| Schrumpf | längs<br>quer | [%] | | | | | |
| Oberflächendefekte | | visuell | keine | keine | keine | keine | keine |
| Einfärbung | | visuell | homogen | homogen | homogen | homogen | homogen |

**Fortsetzung Tabelle 2**

| | | Einheit | B6 | B7 | B8 | B9 | B10 |
|---|---|---|---|---|---|---|---|
| Folienaufbau | | | B | B | ABA | B | B |
| Dicke | | [µm] | 50 | 50 | 50 | 50 | 50 |
| Transparenz | | [%] | 8,7 | 14,4 | 14,9 | 16,5 | 16,5 |
| Gelbzahl (YID) | | | 4,9 | 4,2 | 4,8 | 9,0 | 7,3 |
| Weißgrad (Berger) | | | 114 | 117 | 112 | 108 | 108 |
| Reißfestigkeit | längs | [N/mm] | | | | 165 | 165 |
| | quer | | | | | 205 | 205 |
| E-Modul | längs | [N/mm] | | | | 4100 | 4100 |
| | quer | | | | | 4850 | 4850 |
| Dichte | gemessen | kg/dm³ | 1,39 | 1,41 | 1,41 | 1,41 | 1,41 |
| | errechnet | | 1,59 | 1,59 | 1,58 | 1,57 | 1,57 |
| Void-Index | | % | 87,2 | 88,5 | 89,9 | 89,8 | 89,8 |
| Durchschlagsfestigkeit | | kV/mm | 160 | 170 | 175 | 174 | 174 |
| Klimatest (bestanden ja/nein) | | | | | | nein | nein |
| Hochtemperaturbeständigkeit | | | | | | schlecht | schlecht |
| UV-Stabilität (Absorption) | | [nm] | | | | <380 | <290 |
| Flammstabilität (Brandkl.) | | | | | | - | - |
| Beschichtung (Haftung) | | | | | | ++ | - |
| Mindestsiegeltemperatur (A/A) | | [°C] | | | | >160 | >160 |
| Siegelnahtfestigkeit (A/A) | | [N/15mm] | | | | <0,5 | <0,5 |
| Oberflächenspannung | | [mN/m] | | | | 40 | 40 |
| Schrumpf | längs | [%] | | | | 1,0 | 1,0 |
| | quer | | | | | 0,8 | 0,8 |
| Oberflächendefekte | | | keine | keine | keine | keine | keine |
| Einfärbung | | | homogen | homogen | homogen | homogen | homogen |

**Fortsetzung Tabelle 2**

| | | Einheit | B11 | B12 | B13 | B14 | B15 |
|---|---|---|---|---|---|---|---|
| Folienaufbau | | | B | ABC | B | B | B |
| Dicke | | [µm] | 50 | 50 | 50 | 50 | 50 |
| Transparenz | | [%] | 16,5 | 17,5 | 16,5 | 16,5 | 16,5 |
| Gelbzahl (YID) | | | 9,4 | 8,7 | 8,8 | 8,7 | 9 |
| Weißgrad (Berger) | | | 107 | 104 | 108 | 107 | 108 |
| Reißfestigkeit | längs | [N/mm] | 165 | 175 | 165 | 165 | 165 |
| | quer | | 205 | 230 | 205 | 205 | 205 |
| E-Modul | längs | [N/mm] | 4100 | 4200 | 4100 | 4100 | 4100 |
| | quer | | 4850 | 5100 | 4850 | 4850 | 4850 |
| Dichte | gemessen | kg/dm³ | 1,41 | 1,40 | 1,41 | 1,41 | 1,41 |
| | errechnet | | 1,57 | 1,56 | 1,57 | 1,57 | 1,57 |
| Void-Index | | % | 89,8 | 89,7 | 89,8 | 89,8 | 89,8 |
| Durchschlagsfestigkeit | | kV/mm | 172 | 177 | 175 | 175 | 174 |
| Klimatest (bestanden ja/nein) | | | nein | nein | ja | ja | nein |
| Hochtemperaturbeständigkeit | | | schlecht | schlecht | gut | sehr gut | schlecht |
| UV-Stabilität (Absorption) | | [nm] | <380 | <380 | <380 | <380 | <380 |
| Flammstabilität (Brandkl.) | | | B1, B2 | - | - | - | - |
| Beschichtung (Haftung) | | | - | - | - | - | - |
| Mindestsiegeltemperatur (A/A) | | [°C] | >160 | 96 | >160 | >160 | >160 |
| Siegelnahtfestigkeit (A/A) | | [N/15mm] | <0,5 | 2,4 | <0,5 | <0,5 | <0,5 |
| Oberflächenspannung | | [mN/m] | 40 | 40 | 40 | 40 | 40 |
| Schrumpf | längs | [%] | 1,0 | 0,7 | 1,0 | 1,0 | 0,3 |
| | quer | | 0,8 | 0,3 | 0,8 | 0,8 | 0,0 |
| Oberflächendefekte | | visuell | keine | keine | keine | keine | keine |
| Einfärbung | | visuell | homogen | homogen | homogen | homogen | homogen |

**Fortsetzung Tabelle 2**

| | | Einheit | B16 | VB1 | VB2 | VB3 | VB4 |
|---|---|---|---|---|---|---|---|
| Folienaufbau | | | B | B | B | B | B |
| Dicke | | [µm] | 50 | 50 | 50 | 130 | 50 |
| Transparenz | | [%] | 16,5 | 20,0 | 15,0 | 8,5 | 7 |
| Gelbzahl (YID) | | | 7,3 | 12 | 36 | k. a. | 45 |
| Weißgrad (Berger) | | | 108 | 93 | 96 | k. a. | 98 |
| Reißfestigkeit | längs | [N/mm] | 165 | | | | 180 |
| | quer | | 205 | | | | 220 |
| E-Modul | längs | [N/mm] | 4100 | | | | 4400 |
| | quer | | 4850 | | | | 5100 |
| Dichte | gemessen | $kg/dm^3$ | 1,41 | 1,42 | 1,46 | 1,32 | 1,48 |
| | errechnet | | 1,57 | 1,60 | 1,48 | 1,69 | 1,57 |
| Void-Index | | % | 89,8 | 89,0 | 98,7 | 78,2 | 94,3 |
| Durchschlagsfestigkeit | | kV/mm | 174 | 168 | 176 | k. a. | 176 |
| Klimatest (bestanden ja/nein) | | | nein | | | | nein |
| Hochtemperaturbeständigkeit | | | schlecht | | | | schlecht |
| UV-Stabilität (Absorption) | | [nm] | <290 | | | | <380 |
| Flammstabilität (Brandkl.) | | | - | | | | - |
| Beschichtung (Haftung) | | | - | | | | - |
| Mindestsiegeltemperatur (A/A) | | [°C] | >160 | | | | >160 |
| Siegelnahtfestigkeit (A/A) | | [N/15mm] | <0,5 | | | | <0,5 |
| Oberflächenspannung | | [mN/m] | 48 | | | | 40 |
| Schrumpf | längs | [%] | 1,0 | | | | 1,0 |
| | quer | | 0,8 | | | | 0,8 |
| Oberflächendefekte | | visuell | keine | keine | keine | keine | keine |
| Einfärbung | | visuell | homogen | homogen | homogen | homogen | homogen |

**Fortsetzung Tabelle 2**

| | | Einheit | VB5 | VB6 |
|---|---|---|---|---|
| Folienaufbau | | | B | B |
| Dicke | | [µm] | 50 | 50 |
| Transparenz | | [%] | 26 | 24 |
| Gelbzahl (YID) | | | 12,1 | 2,2 |
| Weißgrad (Berger) | | | 106 | 115 |
| Reißfestigkeit | längs<br>quer | [N/mm] | 175<br>205 | 175<br>205 |
| E-Modul | längs<br>quer | [N/mm] | 4250<br>4950 | 4250<br>4950 |
| Dichte | gemessen<br>errechnet | $kg/dm^3$ | 1,36<br>1,57 | 1,36<br>1,57 |
| Void-Index | | % | 86,6 | 86,6 |
| Durchschlagsfestigkeit | | kV/mm | 168 | 168 |
| Klimatest (bestanden ja/nein) | | | nein | nein |
| Hochtemperaturbeständigkeit | | | schlecht | schlecht |
| UV-Stabilität (Absorption) | | [nm] | <290 | <380 |
| Flammstabilität (Brandkl.) | | | - | - |
| Beschichtung (Haftung) | | | - | - |
| Mindestsiegeltemperatur (A/A) | | [°C] | >160 | >160 |
| Siegelnahtfestigkeit (A/A) | | [N/15mm] | <0,5 | <0,5 |
| Oberflächenspannung | | [mN/m] | 40 | 40 |
| Schrumpf | längs<br>quer | [%] | 1,0<br>0,8 | 1,0<br>0,8 |
| Oberflächendefekte | | visuell | keine | keine |
| Einfärbung | | visuell | homogen | homogen |

## Patentansprüche

1. Weiß-opake Folie enthaltend einen kristallisierbaren Thermoplasten, Bariumsulfat mit einem Teilchendurchmesser von 0,2 bis 1,0 µm und Titandioxid und mindestens einen optischen Aufheller, wobei die Folie einen Void-Index von >87 % aufweist.

2. Folie nach Anspruch 1, **dadurch gekennzeichnet**, das der Anteil des kristallisierbaren Thermoplasten größer als

50 Gew.-% ist, bezogen auf das Gesamtgewicht der Folie.

**3.** Folie nach Anspruch 1 oder 2, **dadurch gekennzeichnet, dass** sie mindestens einen im Thermoplasten löslichen Farbstoff enthält.

**4.** Folie nach einem oder mehreren der Ansprüche 1 bis 3, **dadurch gekennzeichnet, dass** als kristallisierbarer Thermoplast ein kristallisierbarer thermoplastischer Polyester verwendet wird.

**5.** Folie nach einem oder mehreren der Ansprüche 1 bis 4, **dadurch gekennzeichnet, dass** der thermoplastische Polyester Einheiten aus Ethylenglykol und Terephthalsäure und/oder Einheiten aus Isophthalsäure, Naphthalin-1,5-dicarbonsäure oder Naphthalin-2,6-dicarbonsäure aufweist

**6.** Folie nach einem oder mehreren der Ansprüche 1 bis 5, **dadurch gekennzeichnet, dass** als thermoplastischer Polyester Polyethylenterephthalat, Polyethylennaphthalat oder Gemische davon verwendet werden.

**7.** Folie nach einem oder mehreren der Ansprüche 1 bis 6, **dadurch gekennzeichnet, dass** die Folie 1 bis 20 Gew.-% Bariumsulfat und 1 bis 20 Gew.-% Titandioxid enthält, jeweils bezogen auf das Gewicht des Thermoplasten der pigmentierten Schicht.

**8.** Folie nach einem oder mehreren der Ansprüche 1 bis 7, **dadurch gekennzeichnet, dass** die Folie 1 bis 25000 ppm optische Aufheller enthält, bezogen auf das Gewicht des Thermoplasten der damit ausgerüsteten Schicht.

**9.** Folie nach einem oder mehreren der Ansprüche 1 bis 8, **dadurch gekennzeichnet, dass** die Folie 1 bis 100 ppm im Thermoplasten lösliche Farbstoffe enthält, bezogen auf das Gewicht des die Farbstoffe enthaltenden Thermoplasten.

**10.** Folie nach einem oder mehreren der Ansprüche 1 bis 9, **dadurch gekennzeichnet, dass** die Folie neben einer Basisschicht B eine oder 2 Deckschichten aufweist, die gleich oder verschieden sein können.

**11.** Folie nach einem oder mehreren der Ansprüche 1 bis 10, **dadurch gekennzeichnet, dass** die Deckschichten Polyethylenterephthalat, Polyethylennaphthalat oder ein Polyethylenterephthalat-Polyethylennaphthalat-Copolymer enthalten.

**12.** Folie nach einem oder mehreren der Ansprüche 1 bis 11, **dadurch gekennzeichnet, dass** die Folie bei einer Dicke von 50 μm eine Transparenz von 1 bis 20 % aufweist.

**13.** Folie nach einem oder mehreren der Ansprüche 1 bis 12, **dadurch gekennzeichnet, dass** die Folie bei einer Dicke von 50 μm einen Gelbwert YID von 1 bis 15 aufweist.

**14.** Folie nach einem oder mehreren der Ansprüche 1 bis 13, **dadurch gekennzeichnet, dass** die Folie einen Weißgrad von größer als 85 % aufweist.

**15.** Folie nach einem oder mehreren der Ansprüche 1 bis 14, **dadurch gekennzeichnet, dass** die Folie bei einer Dicke von 50 μm eine elektrische Durchschlagsfestigkeit von größer als 150 kV/mm aufweist.

**16.** Folie nach einem oder mehreren der Ansprüche 1 bis 15, **dadurch gekennzeichnet, dass** die Folie einen Void-Index von größer als 87 % aufweist.

**17.** Folie nach einem oder mehreren der Ansprüche 1 bis 16, **dadurch gekennzeichnet, dass** die Folie eine Dichte von größer als 1,39 kg/dm$^3$ aufweist.

**18.** Folie nach einem oder mehreren der Ansprüche 1 bis 17, **dadurch gekennzeichnet, dass** sie eine zusätzliche Funktionalität aufweist.

**19.** Folie nach Anspruch 18, **dadurch gekennzeichnet, dass** die Folie zur Erzielung einerzusätzlichen Funktionalität ein-oder beidseitig eine Haftbeschichtung, eine Beschichtung mit einem Aminosilan oder eine Beschichtung mit Silikon aufweist.

20. Folie nach Anspruch 18 oder 19, **dadurch gekennzeichnet, dass** die Folie zur Erzielung einer zusätzlichen Funktionalität coronabehandelt, hydrolysebeständig ausgerüstet, UV-stabilisiert oder flammhemmend ausgerüstet ist.

21. Folie nach einem oder mehreren der Anspracht3 18 bis 20, **dadurch gekennzeichnet, dass** die Folie in Längs- und Querrichtung einen Schrumpf von kleiner als 2,5 % aufweist, wenn sie 15 min. auf 150 °C erhitzt wird.

22. Folie nach einem oder mehreren der Ansprüche 18 bis 21, **dadurch gekennzeichnet, dass** die Folie mindestens eine siegelfähige Deckschicht aufweist.

23. Verfahren zur Herstellung einer Folie nach einem oder mehreren der Ansprüche 1 bis 22 umfassend die Schritte:

a) Herstellen einer Folie durch Extrusion oder Coextrusion,
b) biaxales Strecken der Folie und
c) Thermofixieren der gestreckten Folie,

wobei die Folie Bariumsulfat miteinem Teilchendurchmesser von 0,2 bis 1,0 μm und Titandioxid und mindestens einen optischen Aufheller enthält und wobei die Folie einen Void-Index von >87 % aufweist.

24. Verwendung einer Folie nach einem oder mehreren der Ansprüche 1 bis 22 für Elektroisolieranwendungen, Innenraumverkleidungen, Schutzverglasungen, Schilder, Etiketten, medizinische und lebensmitteltechnische Zwecke.

## Claims

1. A white opaque film comprising a crystallizable thermoplastic, barium sulfate whose particle diameter is from 0.2 to 1.0 μm, and titanium dioxide, and at least one optical brightener, where the void index of the film is > 87 %.

2. The film as claimed in claim 1, wherein the proportion of the crystallizable thermoplastic is greater than 50 % by weight, based on the total weight of the film.

3. The film as claimed in claim 1 or 2, which comprises at least one dye soluble in the thermoplastic.

4. The film as claimed in one or more of claims 1 to 3, wherein a crystallizable thermoplastic polyester is used as crystallizable thermoplastic.

5. The film as claimed in one or more of claims 1 to 4, wherein the thermoplastic polyester has units derived from ethylene glycol and terephthalic acid and/or units derived from isophthalic acid, naphthalene-1,5-dicarboxylic acid or naphthalene-2,6-dicarboxylic acid.

6. The film as claimed in one or more of claims 1 to 5, wherein polyethylene terephthalate, polyethylene naphthalate or a mixture of these is used as thermoplastic polyester.

7. The film as claimed in one or more of claims 1 to 6, which comprises from 1 to 20 % by weight of barium sulfate and from 1 to 20 % by weight of titanium dioxide, based in each case on the weight of the thermoplastic of the pigmented layer.

8. The film as claimed in one or more of claims 1 to 7, which comprises from 1 to 25 000 ppm of optical brighteners, based on the weight of the thermoplastic of the layer modified therewith.

9. The film as claimed in one or more of claims 1-to 8, which comprises from 1 to 100 ppm of dyes soluble in the thermoplastic, based on the weight of the thermoplastic comprising the dyes.

10. The film as claimed in one or more of claims 1 to 9, which has, alongside a base layer B, one or 2 outer layers, which may be identical or different.

11. The film as claimed in one or more of claims 1 to 10, wherein the outer layers comprise polyethylene terephthalate, polyethylene naphthalate, or a polyethylene terephthalate-polyethylene naphthalate copolymer.

**12.** The film as claimed in one or more of claims 1 to 11, which at a thickness of 50 μm has a transparency of from 1 to 20 %.

**13.** The film as claimed in one or more of claims 1 to 12, which at a thickness of 50 μm has a yellowness index YID of from 1 to 15.

**14.** The film as claimed in one or more of claims 1 to 13, whose whiteness is greater than 85 %.

**15.** The film as claimed in one or more of claims 1 to 14, which at a thickness of 50 μm has a dielectric strength greater than 150 kV/mm.

**16.** The film as claimed in one or more of claims 1 to 15, whose void index is greater than 87 %.

**17.** The film as claimed in one or more of claims 1 to 16, whose density is greater than 1.39 $kg/dm^3$.

**18.** The film as claimed in one or more of claims 1 to 17, which has an additional functionality.

**19.** The film as claimed in claim 18, wherein, in order to obtain an additional functionality, one or both sides of the film has/have an adhesive coating, a coating with an aminosilane, or a coating with silicone.

**20.** The film as claimed in claim 18 or 19, which, in order to obtain an additional functionality, has been corona-treated, rendered hydrolysis-resistant, UV-stabilized, or rendered flame-retardant.

**21.** The film as claimed in one or more of claims 18 to 20, whose longitudinal and transverse shrinkage is smaller than 2.5 % when it is heated to 150 °C over a period of 15 min.

**22.** The film as claimed in one or more of claims 18 to 21, which has at least one sealable outer layer.

**23.** A process for production of a film as claimed in one or more of claims 1 to 22, encompassing the steps of:

a) production of a film via extrusion or coextrusion,
b) biaxial stretching of the film, and
c) heat-setting of the stretched film,

where the film comprises barium sulfate whose particle diameter is from 0.2 to 1.0 μm, and titanium dioxide, and at least one optical brightener, and where the void index of the film is > 87 %.

**24.** The use of a film as claimed in one or more of claims 1 to 22 for electrical insulation applications, interior coverings, protective glazing, placards, labels, medical applications, and applications in the food-and-drink industry.

**Revendications**

**1.** Feuille blanche opaque contenant un thermoplastique cristallisable, du sulfate de baryum avec une taille de particule de 0,2 μm à 1,0 μm et du dioxyde de titane et au moins un azurant optique, où la feuille présente un indice de vide supérieur à 87 %.

**2.** Feuille selon la revendication 1, **caractérisée en ce que** la proportion de thermoplastique cristallisable est supérieure à 50 % en poids, par au poids total de la feuille.

**3.** Feuille selon la revendication 1 ou 2, **caractérisée en ce qu'**elle contient au moins un colorant soluble dans un thermoplastique.

**4.** Feuille selon l'une quelconque des revendications 1 à 3, **caractérisée en ce qu'**on utilise comme thermoplastique cristallisable un polyester thermoplastique cristallisable.

**5.** Feuille selon l'une quelconque des revendications 1 à 4, **caractérisée en ce que** le polyester thermoplastique contient des unités d'éthylène glycol et d'acide téréphtalique et/ou des unités d'acide isophtalique, d'acide naphtalène-1,5-dicarboxylique ou d'acide naphtalène-2,6-dicarboxylique.

6. Feuille selon l'une quelconque des revendications 1 à 5, **caractérisée en ce qu'**on utilise comme polyester thermoplastique un polyéthylènetéréphtalate, un polyéthylènenaphtalate ou leur mélange.

7. Feuille selon l'une quelconque des revendications 1 à 6, **caractérisée en ce que** la feuille contient de 1 % à 20 % en poids de sulfate de baryum et de 1 % à 20 % en poids de dioxyde de titane, chacun par rapport au poids de thermoplastique de la couche pigmentée.

8. feuille selon l'une ou plusieurs des revendications 1 à 7, **caractérisée en ce que** la feuille contient 1 à 25 000 ppm d'azurant optique, par rapport au poids du thermoplastique de la couche modifiée avec celui-ci.

9. Feuille selon l'une ou plusieurs des revendications 1 à 8, **caractérisée en ce que** la feuille contient 1 à 100 ppm de colorants solubles dans le thermoplastique, par rapport au poids du thermoplastique contenant les colorants.

10. Feuille selon l'une ou plusieurs des revendications 1 à 9, **caractérisée en ce que** la feuille contient en plus d'une couche de base B une ou deux couches de revêtement, qui peuvent être identiques ou différentes.

11. Feuille selon l'une ou plusieurs des revendications 1 à 10, **caractérisée en ce que** les couches de revêtement contiennent du polyéthylène téréphtalate, du polyéthylène naphtalate, ou un copolymère de polyéthylène téréphtalate - polyéthylène naphtalate.

12. Feuille selon l'une ou plusieurs des revendications 1 à 11, **caractérisée en ce que** la feuille ayant une épaisseur de 50 $\mu$m présente une transparence de 1 % à 20 %.

13. Feuille selon l'une ou plusieurs des revendications 1 à 12, **caractérisée en ce que** la feuille ayant une épaisseur de 50 $\mu$m présente une valeur de jaunissement YID de 1à15.

14. Feuille selon l'une ou plusieurs des revendications 1 à 13, **caractérisée en ce que** la feuille présente une blancheur supérieure à 85 %.

15. Feuille selon l'une ou plusieurs des revendications 1 à 14, **caractérisée en ce que** la feuille ayant une épaisseur de 50 $\mu$m présente une rigidité diélectrique supérieure à 150 kV/mm.

16. Feuille selon l'une ou plusieurs des revendications 1 à 15, **caractérisée en ce que** la feuille présente un indice de vide supérieur à 87 %.

17. Feuille selon l'une ou plusieurs des revendications 1 à 16, **caractérisée en ce que** la feuille présente une densité supérieure à 1,39 $kg/dm^3$.

18. Feuille selon l'une ou plusieurs des revendications 1 à 17, **caractérisée en ce qu'**elle présente une fonctionnalité supplémentaire.

19. Feuille selon la revendication 18, **caractérisée en ce que** la feuille possède pour l'obtention d'une fonctionnalité supplémentaire un revêtement adhésif sur un ou deux côtés, un revêtement avec un aminosilane ou un revêtement avec une silicone.

20. Feuille selon la revendication 18 ou 19, caracérisée en ce que la feuille est munie pour l'obtention d'une fonctionnalité supplémentaire d'un traitement corona, d'une résistance à l'hydrolyse, d'une stabilisation aux UV, ou d'un ignifuge.

21. Feuillé selon l'une ou plusieurs des revendications 18 à 20, **caractérisée en ce que** la feuille présente un retrait longitudinal et transversal inférieur à 2,5 %, quand la feuille est chauffée pendant 15 min à 150°C.

22. Feuille selon l'une ou plusieurs des revendications 18 à 21, **caractérisée en ce que** la feuille possède au moins une couche de revêtement étanche.

23. Procédé de production d'une feuille selon l'une ou plusieurs des revendications 1 à 22 comprenant les étapes suivantes :

   a) production d'une feuille par extrusion ou coextrusion,

b) étirage biaxial de la feuille et,
c) thermodurcissement de la feuille étirée,

où la feuille contient du sulfate de baryum avec une taille de particule de 0,2 μm à 1,0 μm et du dioxyde de titane et au moins un azurant optique et où la feuille présente un indice de vide supérieure à 87 %.

**24.** Utilisation d'une feuille selon l'une ou plusieurs des revendications 1 à 22, pour l'isolation électrique, des revêtements intérieurs, des verres de protection, des panneaux, des étiquettes, des applications médicales et alimentaires.

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

### In der Beschreibung aufgeführte Patentdokumente


- EP 1125967 A
- US 4780402 A
- EP 0044515 A
- EP 0078633 A
- WO 9413476 A
- EP 144878 A
- US 4252885 A
- EP 296620 A
- WO 9413481 A
- US PS4663228 A
- DE 68926896 T2
- GB PS1411564 A
- US 5350601 A
- EP 1013703 A
- EP 0515096 A


### In der Beschreibung aufgeführte Nicht-Patentliteratur


- Plastics Additives Handbook. Carl Hanser Verlag, 2001, vol. 5
- *Kunststoff-Journal,* vol. 8 (10), 30-36
- *KUNSTSTOFF-JOURNAL,* 1974, vol. 11, 36-31
- der Monographie. **VON GÄCHTER ; MÜLLER.** Kunststoffadditive. Carl Hanser Verlag, vol. 2
- **H. DAY ; D. M. WILES.** *J. Appl. Polym. Sci.,* 1972, vol. 16, 203